# EUROPÄISCHE PATENTSCHRIFT

(11) **EP 1 368 389 B1**
(45) Veröffentlichungstag und Bekanntmachung des Hinweises auf die Patenterteilung: **30.08.2006**
(21) Anmeldenummer: 02711834.8
(22) Anmeldetag: 06.02.2002
(51) Int. Cl.: C08F 10/00, C08F 4/62

(54) **KOMPLEXVERBINDUNGEN UND IHRE VERWENDUNG ZUR POLYMERISATION VON OLEFINEN**
COMPLEXED COMPOUNDS AND USE THEREOF FOR THE POLYMERISATION OF OLEFINS
COMPOSES COMPLEXES ET LEUR UTILISATION POUR POLYMERISER DES OLEFINES

(30) Priorität: 13.02.2001 DE 10107045
(43) Veröffentlichungstag der Anmeldung: 10.12.2003
(73) Patentinhaber: Basell Polyolefine GmbH, 50389 Wesseling (DE)
(72) Erfinder: KRISTEN, Marc, Oliver, 67117 Limburgerhof (DE); BILDSTEIN, Benno, A-6020 Innsbruck (AT); KRAJETE, Alexander, A-5020 Salzburg (AT)
(86) Internationale Anmeldenummer: PCT/EP2002/001191
(87) Internationale Veröffentlichungsnummer: WO 2002/064644

(56) Entgegenhaltungen:
- EP-A- 0 803 520
- EP-A- 1 174 442
- WO-A-02/02573
- DE-A- 10 017 663
- DE-A- 10 035 654

## Beschreibung

Die vorliegende Erfindung betrifft Komplexverbindungen der allgemeinen Formel I a bis I b, 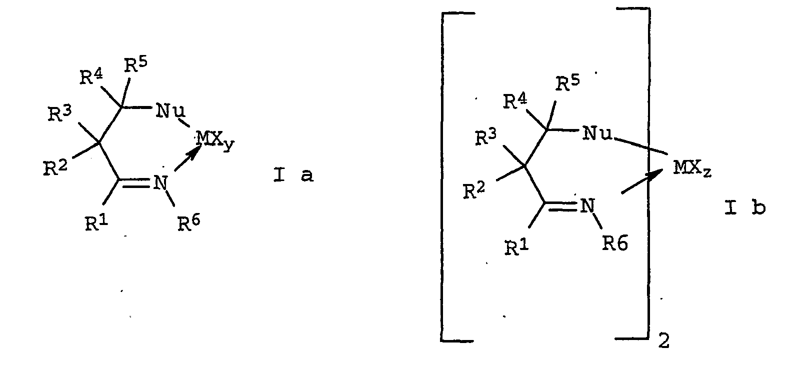 bei denen die Variablen wie folgt definiert sind:
- Nu: ausgewählt aus O, S, Se oder N-R⁷;
- M: ausgewählt aus Ti, Zr, Hf, V, Nb oder Ta;
- y: entspricht der Oxidationsstufe von M abzüglich 1;
- z: entspricht der Oxidationsstufe von M abzüglich 2;
- X: gleich oder verschieden und ausgewählt aus Halogen, C₁-C₈-Alkyl, C₃-C₁₂-Cycloalkyl, C₇-C₁₃-Aralkyl oder C₆-C₁₄-Aryl,
- R¹: bis R⁷ gleich oder verschieden und ausgewählt aus Wasserstoff,
C₁-C₁₈-Alkyl, substituiert oder unsubstituiert,
C₂-C₁₈-Alkenyl, substituiert oder unsubstituiert, mit ein bis 4 isolierten oder konjugierten Doppelbindungen;
C₃-C₁₂-Cycloalkyl, substituiert oder unsubstituiert,
C₇-C₁₃-Aralkyl,
C₆-C₁₄-Aryl, unsubstituiert oder einfach oder mehrfach gleich oder verschieden substituiert mit
C₁-C₁₈-Alkyl, substituiert oder unsubstituiert,
C₂-C₁₈-Alkenyl, substituiert oder unsubstituiert,
C₃-C₁₂-Cycloalkyl,
C₇-C₁₃-Aralkyl,
C₆-C₁₄-Aryl,
Halogen,
C₁-C₆-Alkoxy, substituiert oder unsubstituiert,
C₆-C₁₄-Aryloxy,
SiR⁸R⁹R¹⁰ oder O-SiR⁸R⁹R¹⁰;
fünf- bis sechsgliedrigen stickstoffhaltigen Heteroaryl-resten, unsubstituiert oder einfach oder mehrfach gleich oder verschieden substituiert mit
C₁-C₁₈-Alkyl, substituiert oder unsubstituiert,
C₂-C₁₈-Alkenyl, substituiert oder unsubstituiert,
C₃-C₁₂-Cycloalkyl,
C₇-C₁₃-Aralkyl,
C₆-C₁₄-Aryl,
Halogen,
C₁-C₆-Alkoxy,
C₆-C₁₄-Aryloxy,
SiR⁸R⁹R¹⁰ oder O-SiR⁸R⁹R¹⁰;
wobei räumlich benachbarte Reste R¹ bis R⁶ miteinander oder mit R⁷ zu einem 5- bis 12-gliedrigen Ring verbunden sein können; der seinerseits Substituenten tragen kann, die ausgewählt sind aus C₁-C₈-Alkyl, substituiert oder unsubstituiert, C₂-C₈-Alkenyl, substituiert oder unsubstituiert, mit ein bis 4 isolierten oder konjugierten Doppelbindungen, C₃-C₁₂-Cycloalkyl, substituiert oder unsubstituiert, C₇-C₁₃-Aralkyl oder C₆-C₁₄-Aryl;
R⁸ bis R¹⁰ gleich oder verschieden und ausgewählt werden aus Wasserstoff, C₁-C₈-Alkyl, C₃-C₁₂-Cycloalkyl, C₇-C₁₃-Aralkyl oder C₆-C₁₄-Aryl.

Weiterhin betrifft die vorliegende Erfindung ein Verfahren zur Polymerisation von Olefinen unter Verwendung von Komplexverbindungen der allgemeinen Formeln I a oder I b.

Polymere und Copolymere von Olefinen sind wirtschaftlich von gro-ßer Bedeutung, weil die Monomere in großen Mengen leicht zugänglich sind und weil sich die Polymere durch Variation des Herstellverfahrens oder der Verarbeitungsparameter in weiten Bereichen variieren lassen. Besondere Aufmerksamkeit beim Herstellverfahren gilt dabei dem verwendeten Katalysator. Neben Ziegler-Natta-Katalysatoren sind verschiedenartige Single-Site-Katalysatoren von wachsender Bedeutung, wobei als Zentralatome neben Zr wie beispielsweise in Metallocenkatalysatoren (H.-H. Brintzinger et *al., Angew. Chem.* **1995,** 107, 1255) auch Ni oder Pd (WO 96/23010) oder Fe und Co (z.B. WO 98/27124) genauer untersucht worden sind. Die Komplexe von Ni, Pd, Fe und Co werden auch als Komplexe Später Übergangsmetalle bezeichnet.

Metallocenkatalysatoren haben für den großtechnischen Einsatz Nachteile. Die am häufigsten verwendeten Metallocene, das sind Zirkonocene und Hafnocene, sind hydrolyseempfindlich. Außerdem sind die meisten Metallocene empfindlich gegenüber einer Vielzahl von Katalysatorgiften wie beispielsweise Alkoholen, Ethern oder CO, was eine sorgfältige Reinigung der Monomeren bedingt.
Während Ni- oder Pd-Komplexe (WO 96/23010) die Bildung hochverzweigter, kommerziell wenig interessanter Polymere katalysieren, führt die Verwendung von Fe- oder Co-Komplexen zur Bildung von hochlinearem Polyethylen mit sehr geringen Anteilen an Comonomer. In EP-A 0 874 005 werden weitere polymerisationsaktive Komplexe offengelegt. Es handelt sich bei den Komplexen bevorzugt um Ti-Komplexe mit Salicylaldiminliganden. Auch sie tragen Phenyl-substituenten oder substituierte.Phenylsubstituenten am Aldimin-Stickstoffatom (Seite 18-23), oder aber das Aldimin-Stickstoffatom ist in einen 6-gliedrigen Ring eingebaut (Seite 31-32). Sie erzeugen aber in der Regel niedermolekulare Polyethylene, die als Werkstoffe wenig geeignet sind. Weiterhin ist den in EP-A 0 874 005 offengelegten Liganden gemeinsam, dass das Sauerstoffatom ein Bestandteil phenolischer Systeme ist, was die Auswahl an leicht zugänglichen Ausgangsmaterialien einschränkt.

Wie G.J.P. Britovsek et al. in Angew. Chem. 1999, 111, 448 und Angew. Chem. Int. Ed. Engl. 1999, 38, 428 zeigen, ist aufgrund der großen kommerziellen Bedeutung von Polyolefinen die Suche nach möglichst vielseitigen polymerisationsaktiven Komplexen auch weiterhin von Bedeutung. Dabei haben Komplexe der sogenannten frühen Übergangsmetalle mit zweizähnigen Liganden besonderes Augenmerk erhalten, beispielsweise Komplexe der allgemeinen Formel A, 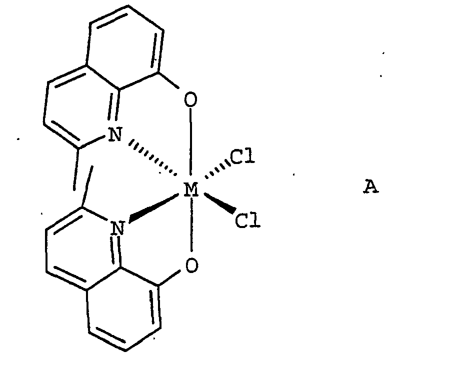 die von X. Bei et al. in Organometallics 1997, 16, 3282 unter-sucht wurden. Die Aktivitäten der Komplexe mit M = Ti oder Zr und bei der Ethylenpolymerisation waren jedoch zu gering, als dass die Komplexe kommerziell von Interesse sein könnten. T. Tsukahara et al. in Organometallics 1997, 16, 3303 und I. Kim et al. in Organometallics 1997, 16, 3314 haben β-Hydroxypyridylkomplexe der allgemeinen Formel B 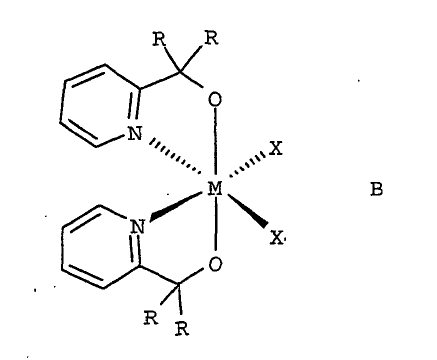 und ihre Aktivität bei der Ethylenpolymerisation untersucht. Wählte man beispielsweise R aus CH₃ oder CF₃ und X Benzyl oder Neopentyl, so konnte bei Aktivierung mit Trispentafluorphenyl-boran keine oder nur äußerst geringe Polymerisationsaktivität gegenüber Ethylen beobachtet werden. Wählte man hingegen R= para-tert.-Butylphenyl und X Benzyl, so wurde eine geringe Aktivität beobachten, die für kommerzielle Zwecke jedoch zu gering war. Die so hergestellten Polymere wiesen außerdem mit Mₙ = 6200 g ein für Werkstoffe zu niedriges Molekulargewicht auf.

Daher bestand die Aufgabe,
- neue Komplexverbindungen bereitzustellen, die zur Polymerisation von Olefinen zu hochmolekularen Polymeren geeignet sind;
- ein Verfahren zur Herstellung der erfindungsgemäßen Komplexverbindungen bereitzustellen;
- ein Verfahren zur Polymerisation oder Copolymerisation von Olefinen unter Verwendung der erfindungsgemäßen Komplexverbindungen bereitzustellen;
- Trägerkatalysatoren für die Polymerisation von Olefinen sowie ein Verfahren zur Herstellung der erfindungsgemäßen Trägerkatalysatoren unter Verwendung der erfindungsgemäßen Komplexverbindungen bereitzustellen;
- mit den erfindungsgemäßen Trägerkatalysatoren Olefine zu polymerisieren und zu copolymerisieren.

Überraschend wurde nun gefunden, dass die Aufgabe mit Hilfe Komplexverbindungen gelöst werden kann, die die eingangs definierten Strukturen der allgemeinen Formel I a bis I b aufweisen.

In Formel I sind die Variablen wie folgt definiert:
- Nu: ausgewählt aus 0, S oder N-R⁷, wobei Sauerstoff bevorzugt ist;
- M: ausgewählt aus Ti, Zr, Hf, V, Nb oder Ta in der Wertigkeit von +3 bis +5; bevorzugt sind Ti oder Zr und besonders bevor-zugt ist Zr;
- y: entspricht der Oxidationsstufe von M abzüglich 1,
- z: entspricht der Oxidationsstufe von M abzüglich 2, wobei es sich bei M um ein Metall in der höchsten Oxidationsstufe handeln kann, aber nicht handeln muss;
- X: gleich oder verschieden und ausgewählt aus
- Halogen, wie Fluor, Chlor, Brom oder Iod, bevorzugt sind Chlor oder Brom und besonders bevorzugt ist Chlor;
- C₁-C₈-Alkyl, wie Methyl, Ethyl, n=Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl und n-Octyl; bevorzugt C₁-C₆-Alkyl wie Methyl, Ethyl, n-Propyl, isoPropyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
- C₃-C₁₂-Cycloalkyl, wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- C₇-C₁₃-Aralkyl bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenyl-butyl und 4-Phenyl-butyl, besonders bevorzugt Benzyl; oder
- C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenant-hryl, 3-Phenanthryl, 4-Phenanthryl und 9-Phenanthryl, bevorzugt Phenyl, 1-Naphthyl und 2-Naphthyl, besonders bevorzugt Phenyl.
Bevorzugt ist X Halogen.
R¹ bis R⁷ sind gleich oder verschieden und ausgewählt aus
- Wasserstoff,
- C₁-C₁₈-Alkylgruppen, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl n-Octyl, n-Decyl, n-Dodecyl oder n-Octadecyl; bevorzugt C₁-C₁₂-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl oder n-Decyl, besonders bevorzugt C₁-C₄-Alkyl wie Methyl, Ethyl, n-Propyl, iso-Propyl, n-Butyl, iso-Butyl, sec.-Butyl und tert.-Butyl;
- Unter den substituierten C₁-C₁₈-Alkylgruppen seien beispielhaft genannt: ein- oder mehrfach halogenierte C₁-C₈-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
- C₂-C₁₈-Alkenyl mit ein bis 4 isolierten oder konjugierten Doppelbindungen, beispielsweise Vinyl, 1-Allyl, 3-Allyl, ω-Butenyl, ω-Pentenyl, ω-Hexenyl, 1-cis-Buta-1,3-dienyl oder 1-cis -Hexa-1,5-dienyl.
- Unter den substituierten C₂-C₁₈-Alkenylgruppen seien beispielhaft genannt: Isopropenyl, 1-Isoprenyl, α-Styryl, β-Styryl, 1-cis-1,2-Phenylethenyl oder 1-trans-1,2-Phenylethenyl.
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- unter den substituierten Cycloalkylgruppen seien beispielhaft genannt:
   2-Methylcyclopentyl, 3-Methylcyclopentyl, cis-2,4-Dimethylcyclopentyl, trans-2,4-Dimethylcyclopentyl, cis-2,5-Dimethylcyclopentyl, trans-2,5-Dimethylcyclopentyl, 2,2,5,5-Tetramethylcyclopentyl, 2-Methylcyclohexyl, 3-Methylcyclohexyl, 4-Methylcyclohexyl, cis-2,6-Dimethylcyclohexyl, trans-2,6-Dimethylcyclohexyl, cis-2,6-Diisopropylcyclohexyl, trans-2,6-Diisopropylcyclohexyl, 2,2,6,6-Tetramethylcyclohexyl, 2-Methoxycyclopentyl, 2-Methoxycyclohexyl, 3-Methoxycyclopentyl, 3-Methoxycyclohexyl, 2-Chlorcyclopentyl, 3-Chlorcyclopentyl, 2,4-Dichlorcyclopentyl, 2,2,4,4-Tetrachlorcyclopentyl, 2-Chlorcyclohexyl, 3-Chlorcyclohexyl, 4-Chlorcyclohexyl, 2,5-Dichlorcyclohexyl, 2,2,6,6-Tetrachlorcyclohexyl, 2-Thiomethylcyclopentyl, 2-Thiomethylcyclohexyl, 3-Thiomethylcyclopentyl, 3-Thiomethylcyclohexyl und weitere Derivate;
- C₇-C₁₃-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenyl-butyl und 4-Phenyl-butyl, besonders bevorzugt Benzyl;
- C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
- C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, gleich oder verschieden substituiert durch eine oder mehrere
   - C₁-C₁₈-Alkylgruppen, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl n-Octyl, n-Decyl, n-Dodecyl oder n-Octadecyl; bevorzugt C₁-C₁₂-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl oder n-Decyl, besonders bevorzugt C₁-C₄-Alkyl wie Methyl, Ethyl, n-Propyl, iso-Propyl, n-Butyl, iso-Butyl, sec.-Butyl und tert.-Butyl;
   - Unter den substituierten C₁-C₈-Alkylgruppen seien beispielhaft genannt: ein- oder mehrfach halogenierte C₁-C₈-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
   - C₂-C₁₈-Alkenyl mit ein bis 4 isolierten oder konjugierten Doppelbindungen, beispielsweise Vinyl, 1-Allyl, 3-Allyl, ω-Butenyl, ω-Pentenyl, ω-Hexenyl, 1-cis-Buta-1,3-dienyl oder 1-cis -Hexa-1,5-dienyl.
   - Unter den substituierten C₂-C₁₈-Alkenylgruppen seien beispielhaft genannt: Isopropenyl, 1-Isoprenyl, α-Styryl, β-Styryl, 1-cis-1,2-Phenylethenyl oder 1-trans-1,2-Phenylethenyl.
   - C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
   - C₇-C₁₃-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenyl-butyl und 4-Phenyl-butyl, besonders bevorzugt Benzyl;
   - C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
   - Halogen, beispielsweise Fluor, Chlor, Brom oder Iod, besonders bevorzugt Fluor oder Chlor;
   - C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy;
   - C₆-C₁₄-Aryloxygruppen wie Phenoxy, ortho-Kresyloxy, meta-Kresyloxy, para-Kresyloxy, α-Naphthoxy, β-Naphthoxy oder 9-Anthryloxy;
   - Silylgruppen SiR⁸R⁹R¹⁰, wobei R⁸ bis R¹⁰ unabhängig voneinander aus Wasserstoff, C₁-C₈-Alkylgruppen, Benzylresten und C₆-C₁₄-Arylgruppen ausgewählt sind; bevorzugt sind die Trimethylsilyl-, Triethylsilyl-, Triisopropylsilyl-, Diethylisopropylsilyl-, Dimethylthexylsilyl-, tert.-Butyldimethylsilyl-, tert.-Butyldiphenylsilyl-, Tribenzylsilyl-, Triphenylsilyl- und die Tri-para-xylylsilylgruppe; besonders bevorzugt sind die Trimethylsilylgruppe und die tert.-Butyldimethylsilylgruppe;
   - Silyloxygruppen OSiR⁸R⁹R¹⁰, wobei R⁸ bis R¹⁰ unabhängig voneinander aus Wasserstoff, C₁-C₈-Alkylgruppen, Benzylresten und C₆-C₁₄-Arylgruppen ausgewählt sind; bevorzugt sind die Trimethylsilyloxy-, Triethylsilyloxy-, Triisopropylsilyloxy-, Diethylisopropylsilyloxy-, Dimethylthexylsilyloxy-, tert.-Butyldimethylsilyloxy-, tert.-Butyldiphenylsilyloxy-;Tribenzylsilyloxy-, Triphenylsilyloxy-und die Tri-para-xylylsilyloxygruppe; besonders bevorzugt sind die Trimethylsilyloxygruppe und die tert.-Butyldi-methylsilyloxygruppe;
- fünf- bis sechsgliedrigen stickstoffhaltigen Heteroarylresten wie beispielsweise N-Pyrrolyl, Pyrrol-2-yl, Pyrrol-3-yl, N-Imidazolyl, 2-Imidazolyl, 4-Imidazolyl, 1,2,4-Triazol-3-yl, 1,2,4-Triazol-4-yl, 2-Pyridyl, 3-Pyridyl, 4-Pyridyl, 3-Pyridazinyl, 4-Pyridazinyl, 2-Pyrimidinyl, 4-Pyrimidinyl, 5-Pyrimidinyl, N-Indolyl und N-Carbazolyl;
- fünf- bis sechsgliedrigen stickstoffhaltigen Heteroarylresten wie beispielsweise N-Pyrrolyl, Pyrrol-2-yl, Pyrrol-3-yl, N-Imidazolyl, 2-Imidazolyl, 4-Imidazolyl, 1,2,4-Triazol-3-yl, 1,2,4-Triazol-4-yl, 2-Pyridyl, 3-Pyridyl, 4-Pyridyl, 3-Pyridazinyl, 4-Pyridazinyl, 2-Pyrimidinyl, 4-Pyrimidinyl, 5-Pyrimidinyl, N-Indolyl und N-Carbazolyl, gleich oder verschieden einfach oder mehrfach substituiert mit
   - C₁-C₁₈-Alkylgruppen, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl n-Octyl, n-Decyl, n-Dodecyl oder n-Octadecyl; bevorzugt C₁-C₁₂-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl oder n-Decyl, besonders bevorzugt C₁-C₄-Alkyl wie Methyl, Ethyl, n-Propyl, iso-Propyl, n-Butyl, iso-Butyl, sec.-Butyl und tert.-Butyl;
   - Unter den substituierten C₁-C₁₈-Alkylgruppen seien beispielhaft genannt: ein- oder mehrfach halogenierte C₁-C₈-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
   - C₂-C₁₈-Alkehyl mit ein bis 4 isolierten oder konjugierten Doppelbindungen, beispielsweise Vinyl, 1-Allyl, 3-Allyl, ω-Butenyl, ω-Pentenyl, ω-Hexenyl, 1-cis-Buta-1,3-dienyl oder 1-cis -Hexa-1,5-dienyl.
   - Unter den substituierten C₂-C₁₈-Alkenylgruppen seien beispielhaft genannt: Isopropenyl, 1-Isoprenyl, α-Styryl, β-Styryl, 1-cis-1,2-Phenylethenyl oder 1-trans-1,2-Phenylethenyl.
   - C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
   - C₇-C₁₃-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenyl-butyl und 4-Phenyl-butyl, besonders bevorzugt Benzyl;
   - C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
   - Halogen, beispielsweise Fluor, Chlor, Brom oder Iod, besonders bevorzugt Fluor oder Chlor;
   - C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy;
   - C₆-C₁₄-Aryloxygruppen wie Phenoxy, *ortho*-Kresyloxy, meta-Kresyloxy, para-Kresyloxy, α-Naphthoxy, β-Naphthoxy oder 9-Anthryloxy;
   - Silylgruppen SiR⁸R⁹R¹⁰, wobei R⁸ bis R¹⁰ unabhängig voneinander aus Wasserstoff, C₁-C₈-Alkylgruppen, Benzylresten und C₆-C₁₄-Arylgruppen ausgewählt sind; bevorzugt sind die Trimethylsilyl-, Triethylsilyl-, Triisopropylsilyl-, Diethylisopropylsilyl-, Dimethylthexylsilyl-, tert.-Butyldimethylsilyl-, tert.-Butyldiphenylsilyl-, Tribenzylsilyl-, Triphenylsilyl- und die Tri-para-xylylsilylgruppe; besonders bevorzugt sind die Trimethylsilylgruppe und die tert.-Butyldimethylsilylgruppe;
   - Silyloxygruppen OSiR⁸R⁹R¹⁰, wobei R⁸ bis R¹⁰ unabhängig voneinander aus Wasserstoff, C₁-C₈-Alkylgruppen, Benzylresten und C₆-C₁₄-Arylgruppen ausgewählt sind; bevorzugt sind die Trimethylsilyloxy-, Triethylsilyloxy-, Triisopropylsilyloxy-, Diethylisopropylsilyloxy-, Dimethylthexylsilyloxy-, tert.-Butyldimethylsilyloxy-, tert.-Butyldiphenylsilyloxy-, Tribenzylsilyloxy-, Triphenylsilyloxy-und die Tri-para-xylylsilyloxygruppe; besonders bevorzugt sind die Trimethylsilyloxygruppe und die tert.-Butyldimethylsilyloxygruppe;

In einer besonders bevorzugten Ausführungsform sind R² oder R³ ungleich Wasserstoff.

In einer besonderen Ausführungsform können benachbarte Reste R¹ bis R⁶ der Komplexverbindungen der allgemeinen Formeln I a oder I b miteinander oder mit R⁷ zu einem 5- bis 12-gliedrigen Ring verbunden sein. Beispielsweise können R¹ und R² zusammen sein: -(CH₂)₃-(Trimethylen), -(CH₂)₄- (Tetramethylen), -(CH₂)₅- (Pentamethylen), -(CH₂)₆- (Hexamethylen), -CH₂-CH=CH-, -CH₂-CH=CH-CH₂-, -CH=CH-CH=CH-, -O-CH₂-O-, -O-CHMe-O-, -O-CH-(C₆H₅)-O-, -O-CH₂-CH₂-O -O-CMe₂-O-, -NMe-CH₂-CH₂-NMe-, -NMe-CH₂-NMe- oder -O-SiMe₂-O- mit Me = CH₃. In einer weiteren Ausführungsform der vorliegenden Erfindung sind R¹ und R⁶ miteinander zu einem 5- bis 12-gliedrigen Ring verbunden. In einer bevorzugten Ausführungsform sind R¹ und R⁶ durch eine substituierte oder unsubstituierte -CH=CH-CH=CH-Einheit verbunden.

Die für das erfindungsgemäße Verfahren benötigten Komplexverbindungen sind synthetisch gut zugänglich.

Zur Synthese der erfindungsgemäßen Komplexverbindungen der allgemeinen Formel I a oder I b geht man im Allgemeinen von einem Liganden der allgemeinen Formel II aus, 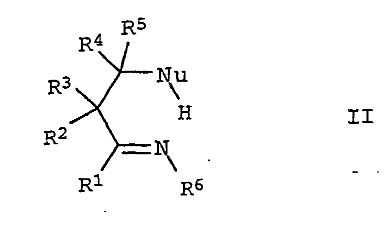 in dem die Variablen wie vorstehend definiert sind.

Die Liganden der allgemeinen Formel II werden zunächst mit Hilfe einer Base deprotoniert und anschließend mit Metallverbindungen der allgemeinen Formel MX_{y+1} umgesetzt.

Als Base können die in der Metallorganischen Chemie gängigen Metallalkyle verwendet werden wie beispielsweise Methyllithium, Ethyllithium, n-Butyllithium, sec-Butyllithium, tert.-Butyllithium oder Hexyllithium, weiterhin Grignard-Verbindungen wie beispielsweise Ethylmagnesiumbromid, weiterhin Lithiumamid, Natriumamid, Kaliumamid, Kaliumhydrid oder Lithiumdiisopropylamid ("LDA"). Als Lösemittel haben sich Lösemittel wie Toluol, ortho-Xylol, meta-Xylol, para-Xylol, Ethylbenzol oder Mischungen derselben als geeignet erwiesen, des Weiteren nichtcyclische oder cyclische Ether wie 1,2-Dimethoxyethan, Tetrahydrofuran oder Diethylether.

Diese Deprotonierung ist im Allgemeinen nach einigen Stunden beendet, sinnvoll ist eine Reaktionsdauer von 2 bis 10 Stunden, bevorzugt sind 3 bis 5 Stunden. Die Temperaturbedingungen sind im Allgemeinen unkritisch, eine Durchführung bei Temperaturen von -90°C bis -20°C hat sich als bevorzugt erwiesen.

Der deprotonierte Ligand und die Metallverbindung der allgemeinen Formeln MX_{y+1} werden anschließend miteinander umgesetzt.

Dabei kann MX_{y+1} optional durch Neutralliganden stabilisiert werden. Als Neutralliganden bieten sich die gängigen Liganden der Komplexchemie an, wie beispielsweise cyclische und nichtcyclische Ether, Amine, Diamine, Nitrile, Isonitrile oder Phosphine. Besonders bevorzugt sind Diethylether, Tetrahydrofuran, 1,2-Dimethoxyethan, Tetramethylethylendiamin, Acetonitril oder Triphenylphosphan.

Die Bedingungen für die Umsetzung sind an sich unkritisch; üblicherweise mischt man den deprotonierten Liganden II und MX_{y+1} miteinander in einem geeigneten Lösemittel wie Benzol, Toluol, Ethylbenzol, ortho-Xylol, meta-Xylol oder para-Xylol, Chlorbenzol, Cyclohexan, Methylenchlorid oder einem Gemisch derselben. Als Temperaturbereich kommen -100°C bis +150°C in Frage, bevorzugt -78°C bis +100°C. Dabei sollte die Reaktionstemperatur den Schmelzpunkt des Lösemittels nicht unterschreiten; Temperaturen oberhalb des Siedepunkts des betreffenden Lösemittels lassen sich in Autoklavenversuchen verwirklichen. Wichtig ist, dass man die Umsetzung unter Ausschluss von Sauerstoff und Feuchtigkeit durchführt.

Als Molverhältnisse zwischen Ligand und M sind solche im Bereich von 5:1 bis 1:5 geeignet. Da jedoch die Liganden der allgemeinen Formel II die aufwändiger zugänglichen Reaktionspartner sind, sind Molverhältnisse Ligand : M im Bereich von 1:1 bis 1:3 bevorzugt, besonders bevorzugt sind stöchiometrische Mengen.

Wünscht man jedoch Verbindungen der allgemeinen Formel I b zu erhalten, so sind Molverhältnisse Ligand : M von 2:1 bis 4:1 bevorzugt.

Die Reinigung der erfindungsgemäßen Komplexverbindungen der allgemeinen Formel I a und I b gelingt durch die in der metallorganischen Chemie üblichen Methoden, wobei Kristallisation und Ausfällen besonders bevorzugt ist, weiterhin sind Filtrationen über Filterhilfsmittel wie beispielsweise Celite® geeignet.

Die Herstellung der Liganden der allgemeinen Formel II gelingt durch Deprotonierung eines Imins der allgemeinen Formel III, 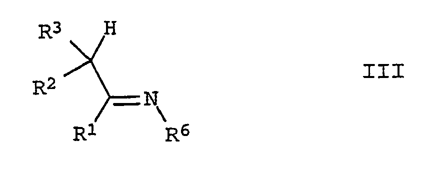 das ein acides α-H-Atom trägt, und anschließende Reaktion mit einer elektrophilen Verbindung der allgemeinen Formel IV, 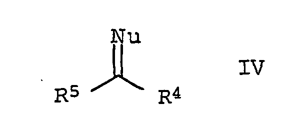 wobei in den Verbindungen III und IV die Variablen wie eingangs definiert sind.

Als Base können die in der Metallorganischen Chemie gängigen Metallalkyle verwendet werden wie beispielsweise Methyllithium, Ethyllithium, n-Butyllithium, sec-Butyllithium, tert.-Butyllithium oder Hexyllithium, weiterhin Grignard-Verbindungen wie beispielsweise Ethylmagnesiumbromid, weiterhin Lithiumamid, Natriumamid, Kaliumamid, Kaliumhydrid oder Lithiumdiisopropylamid ("LDA"). Als Lösemittel haben sich Lösemittel wie Toluol, ortho-Xylol, meta-Xylol, para-Xylol, Ethylbenzol oder Mischungen derselben als geeignet erwiesen, des Weiteren nichtcyclische oder cyclische Ether wie 1,2-Dimethoxyethan, Tetrahydrofuran oder Diethylether.

Diese Deprotonierung ist im Allgemeinen nach einigen Minuten bis zu wenigen Stunden beendet, sinnvoll ist eine Reaktionsdauer von 30 Minuten bis 10 Stunden, bevorzugt sind 1 bis 5 Stunden. Die Temperaturbedingungen sind im Allgemeinen unkritisch, eine Durchführung bei Temperaturen von -90°C bis +30°C hat sich als bevorzugt erwiesen.

Das deprotonierte Imin III und die elektrophile Verbindung IV werden anschließend miteinander umgesetzt.

Die Bedingungen für die Umsetzung sind an sich unkritisch; üblicherweise mischt man das deprotonierte Imin III und die elektrophile Verbindung IV miteinander in einem geeigneten Lösemittel wie Benzol, Toluol, Ethylbenzol, ortho-Xylol, meta-Xylol oder para-Xylol, Chlorbenzol; Cyclohexan, Methylenchlorid oder einem Gemisch derselben. Als Temperaturbereich kommen -100°C bis +150°C in Frage, bevorzugt -78°C bis +100°C. Dabei sollte die Reaktionstemperatur den Schmelzpunkt des Lösemittels nicht unterschreiten; Temperaturen oberhalb des Siedepunkts des betreffenden Lösemittels lassen sich in Autoklavenversuchen verwirklichen.

Wichtig ist, dass man die Umsetzung unter Ausschluss von Sauerstoff und Feuchtigkeit durchführt.

Als Molverhältnisse zwischen III und IV sind solche im Bereich von 5:1 bis 1:5 geeignet, bevorzugt sind Molverhältnisse III : IV im Bereich von 3:1 bis 1:3, besonders bevorzugt sind stöchiometrische Mengen.

Die Synthese der Imine der allgemeinen Formel II kann nach verschiedenen, an sich aus der Literatur bekannten Methoden durchgeführt werden. Beispielhaft seien genannt: B. Bildstein et al., Synthesis 1994, 2, 157; W. Flitsch et al., Chem. Ber. 1969, 102, 3268; A. Cobas et al., J. Org. Chem. 1993, 58, 3113; M. Sato, et al., Chem. Lett. 1992, 3, 485; Reddelien, Chem. Ber. 1910, 43, 2478, P. Schnider et al., Chem. Eur. J. 1997, 3, 887.

Es wurde gefunden, dass die erfindungsgemäßen Komplexe der allgemeinen Formel I a und I b geeignet sind, um Olefine zu polymerisieren. Besonders gut polymerisieren und copolymerisieren sie Ethylen und Propylen zu hochmolekularen Polymeren. Komplexe der allgemeinen Formel I b sind chiral, sie können bei der Polymerisation isotaktisches Polypropylen liefern.

Damit die erfindungsgemäßen Komplexe der allgemeinen Formeln I a und I b katalytisch aktiv sind, müssen sie aktiviert werden. Geeignete Aktivatoren sind ausgewählte Aluminium- oder Bor-Verbindungen mit elektronenziehenden Resten (z.B. Trispentafluorphenylboran, Trispentafluorphenylaluminium, N,N-Dimethylanilinium-tetrakis-pentafluorphenylborat, Tri-n-butylammonium-tetrakis-pentafluorphenylborat, *N,N*-Dimethylanilinium-tetrakis-(3,5-bisperfluormethyl)-phenylborat, Tri-n-butylammonium-tetrakis-(3,5-bis-perfluormethyl)-phenylborat sowie Tritylium-tetrakispentafluorphenylborat). Bevorzugt sind Dimethylanilinium-tetrakis-pentafluorphenylborat, Tritylium-tetrakispentafluorphenylborat sowie Trispentafluorphenylboran.

Verwendet man Bor- oder Aluminiumverbindungen als Aktivatoren für die erfindungsgemäßen metallorganischen Verbindungen der allgemeinen Formel I a oder I b, so setzt man sie im Allgemeinen in einem molaren Verhältnis von 1 : 10 bis 10 : 1, bezogen auf M, ein; bevorzugt 1 : 2 bis' 5 : 1 und besonders bevorzugt in stöchiometrischen Mengen.

Eine andere geeignete Klasse von Aktivatoren sind Aluminoxane. Die Struktur der Aluminoxane ist nicht genau bekannt. Es handelt sich bei ihnen um Produkte, die durch vorsichtige partielle Hydrolyse von Aluminiumalkylen erhalten werden (s. DE-A 30 07 725). Diese Produkte liegen nicht rein vor, sondern als Gemische von offenkettigen und cyclischen Strukturen des Typs VI a und VI b. Diese Gemische liegen vermutlich in einem dynamischen Gleichgewicht zueinander vor.

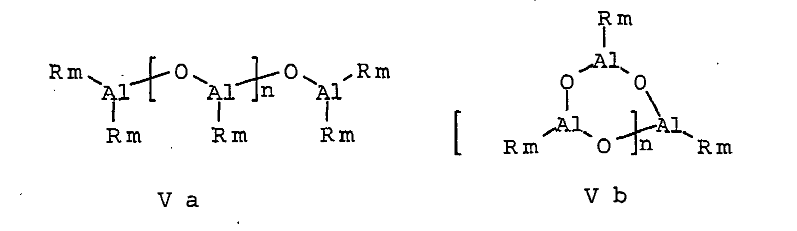

In Formel V a und V b sind die Reste R^{m} unabhängig voneinander
- C₁-C₁₂-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt ist Methyl;
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- C₇- bis C₂₀-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, 1-Phenyl-butyl, 2-Phenyl-butyl, 3-Phenyl-butyl und 4-Phenyl-butyl, besonders bevorzugt Benzyl, oder
- C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl; und
   n ist eine ganze Zahl von 0 bis 40, bevorzugt von 1 bis 25 und besonders bevorzugt von 2 bis 22.

In der Literatur werden auch käfigartige Strukturen für Aluminoxane diskutiert (Y. Koide, S.G. Bott, A.R. Barron Organometallics 1996, 15, 2213-26; A.R. Barron Macromol. Symp. 1995, 97, 15-25). Unabhängig davon, wie die Struktur der Aluminoxane tatsächlich aussieht, sind sie als Aktivatoren der erfindungsgemäßen Metallkomplexe der allgemeinen Formeln I a oder I b geeignet.

Gemische verschiedener Aluminoxane sind in den Fällen besonders bevorzugte Aktivatoren, in denen in einer Lösung eines Paraffins, beispielsweise n-Heptan oder Isododekan, polymerisiert wird. Eine besonders bevorzugtes Gemisch ist das kommerziell bei der Firma Witco GmbH erhältliche CoMAO mit einer Formel von [(CH₃)_{0,9}(iso-C₄H₉)_{0,1}AlO]ₙ.

Um die Komplexverbindungen der allgemeinen Formel I a oder I b mit Aluminoxanen zu aktivieren, ist im Allgemeinen ein Überschuss von Aluminoxan, bezogen auf M, notwendig. Sinnvolle Molverhältnisse M : Al liegen im Bereich von 1 : 10 bis 1 : 10.000, bevorzugt 1: 50 bis 1 : 1000 und besonders bevorzugt 1: 100 bis 1:500.

Der gewählte Komplex der allgemeinen Formeln I a oder I b und der Aktivator bilden zusammen ein Katalysatorsystem.

Durch Zugabe von weiterem Aluminiumalkyl der allgemeinen Formel Al(R^{m})₃ oder Aluminoxanen kann die Aktivität des erfindungsgemäßen Katalysatorsystems erhöht werden; Aluminiumalkyle der allgemeinen Formel Al(R^{m})₃ oder Aluminoxane können auch als Molmassenregler wirken. Ein weiterer effektiver Molmassenregler ist Wasserstoff. Besonders gut kann man die Molmasse durch die Reaktionstemperatur und den Druck regeln. Für den Fall, dass die Verwendung einer Bor-Verbindung wie oben beschrieben gewünscht ist, ist die Zugabe eines Aluminiumalkyls der allgemeinen Formel Al(R^{m})₃ besonders bevorzugt.

Druck- und Temperaturbedingungen während der Polymerisation können in weiten Grenzen gewählt werden. Als Druck hat sich ein Bereich von' 0,5 bar bis 4000 bar als geeignet erwiesen, bevorzugt sind 10 bis 75 bar oder Hochdruckbedingungen von 500 bis 2500 bar. Als Temperatur hat sich ein Bereich von 0 bis 120°C als geeignet erwiesen, bevorzugt sind 40 bis 100°C und besonders bevorzugt 50 bis 85°C.

Als Monomer sind die folgenden Olefine zu nennen: Ethylen, Propylen, 1-Buten, 1-Penten, 1-Hexen, 1-Octen, 1-Decen oder 1-Undecen, wobei Propylen und Ethylen bevorzugt und Ethylen besonders bevorzugt ist.

Als Comonomere sind α-Olefine geeignet, wie beispielsweise 0,1 bis 20 mol-% 1-Buten, 1-Penten, 1-Hexen, 4-Methyl-1-Penten, 1-Octen, 1-Decen oder 1-Undecen. Aber auch Isobuten und Styrol sind geeignete Comonomere, des weiteren interne Olefine wie beispielsweise Cyclopenten, Cyclohexen, Norbornen und Norbornadien.

Als Lösemittel haben sich Toluol, ortho-Xylol, meta-Xylol, para-Xylol oder Ethylbenzol als geeignet erwiesen sowie Mischungen derselben, weiterhin - bei Hochdruckbedingungen - überkritisches Ethylen.

Die erfindungsgemäßen Katalysatorsysteme polymerisieren Olefine zu Polyolefinen mit sehr hohem Molekulargewicht.

Die erfindungsgemäßen Katalysatorsysteme lassen sich bei der Polymerisation mit Wasserstoff regeln, d.h. durch Zugabe von Wasserstoff lässt sich das Molekulargewicht der durch das erfindungsgemäße Katalysatorsystem erhältlichen Polymere senken. Bei genügend Wasserstoffzugabe werden Wachse erhalten, wobei die erforderliche Wasserstoffkonzentration auch von der Art der verwendeten Polymerisationsanlage abhängt.

Damit die erfindungsgemäßen Katalysatorsysteme in modernen Polymerisationsverfahren wie Suspensionsverfahren, Massepolymerisationsverfahren oder Gasphasenverfahren eingesetzt werden können, ist es notwendig, sie auf einem festen Träger zu immobilisieren. Andernfalls kann es zu Morphologieproblemen des Polymers (Brokken, Wandbeläge, Verstopfungen in Leitungen oder Wärmetauschern) kommen, die zum Abschalten der Anlage zwingen. Ein solches immobilisiertes Katalysatorsystem wird als Katalysator bezeichnet.

Die erfindungsgemäßen Katalysatorsysteme lassen sich auf festen Trägermaterialien abscheiden. Als Trägermaterialien kommen z.B. poröse Metalloxide von Metallen der Gruppen 2 bis 14 oder Mischungen derselben in Frage, weiterhin Schichtsilikate und Zeolithe. Bevorzugte Beispiele für Metalloxide der Gruppen 2 bis 14 sind SiO₂, B₂O₃, Al₂O₃, MgO, CaO und ZnO. Bevorzugte Schichtsilikate sind Montmorrilonite oder Bentonite; als bevorzugter Zeolith wird MCM-41 eingesetzt.

Besonders bevorzugte Trägermaterialien sind sphärische Kieselgele und Alumosilikatgele der allgemeinen Formel SiO₂-a Al₂O₃, wobei a allgemein für eine Zahl im Bereich von 0 bis 2 steht, bevorzugt 0 bis 0,5. Derartige Kieselgele sind im Handel erhältlich, z.B. Silica Gel SG 332, Sylopol® 948 oder 952 oder S 2101 der Fa. W.R. Grace oder ES 70X der Fa. Crosfield.

Als Partikelgröße des Trägermaterials haben sich mittlere Teilchendurchmesser von 1 bis 300 µm bewährt, bevorzugt von 20 bis 80 µm, wobei der Teilchendurchmesser durch bekannte Methoden wie Siebmethoden bestimmt wird. Das Porenvolumen dieser Träger beträgt 1,0 bis 3,0 ml/g, bevorzugt von 1,6 bis 2,2 ml/g und besonders bevorzugt von 1,7 bis 1,9 ml/g. Die BET-Oberfläche beträgt 200 bis 750 m²/g, bevorzugt 250 bis 400 m²/g.

Um dem Trägermaterial anhaftende Verunreinigungen, insbesondere Feuchtigkeit, zu entfernen, können die Trägermaterialien vor der Dotierung ausgeheizt werden, wobei sich Temperaturen von 45 bis 1000°C eignen. Temperaturen von 100 bis 750°C sind für Kieselgele und andere Metalloxide besonders geeignet. Dieses Ausheizen kann über einen Zeitraum von 0,5 bis 24 Stunden erfolgen, wobei Ausheizzeiten von 1 bis 12 Stunden bevorzugt sind. Die Druckbedingungen sind vom gewählten Verfahren abhängig; das Ausheizen kann in einem Festbettverfahren, einem gerührten Kessel oder aber in einem Fließbettverfahren erfolgen. Ganz allgemein kann das Ausheizen bei Atmosphärendruck erfolgen. Vorteilhaft sind jedoch verminderte Drücke von 0,1 bis 500 mbar, besonders vorteilhaft ist ein Bereich von 1 bis 100 mbar und ganz besonders vorteilhaft ein Bereich von 2 bis 20 mbar. Für Fließbettverfahren hingegen empfiehlt es sich, bei leicht erhöhtem Druck zu arbeiten, wobei der Druck in einem Bereich von 1,01 bar bis 5 bar, bevorzugt 1,1 bis 1,5 bar gewählt wird.

Eine chemische Vorbehandlung des Trägermaterials mit einer Alkylverbindung wie Aluminiumalkyl, Lithiumalkyl oder einem Alumoxan ist ebenfalls möglich.

Für eine Polymerisation im Suspensionsverfahren werden solche Suspensionsmittel verwendet, in denen das gewünschte Polymer nicht oder nur in geringem Ausmaß löslich ist, weil andernfalls in den Anlagenteilen, in denen das Produkt vom Suspensionsmittel abgetrennt wird, Beläge des Produkts auftreten und zu wiederholten Abschaltungen und Reinigungsoperationen zwingen. Geeignete Suspensionsmittel sind gesättigte Kohlenwasserstoffe wie beispielsweise Propan, n-Butan, Isobutan, n-Pentan, Isopentan, n-Hexan, Isohexan und Cyclohexan, wobei Isobutan bevorzugt ist.

Druck- und Temperaturbedingungen während der Polymerisation können in weiten Grenzen gewählt werden. Als Druck hat sich ein Bereich von 0,5 bar bis 150 bar als geeignet erwiesen, bevorzugt sind 10 bis 75 bar. Als Temperatur hat sich ein Bereich von 0 bis 120°C als geeignet erwiesen, bevorzugt sind 40 bis 100°C. Als Monomer sind die folgenden Olefine zu nennen: Ethylen, Propylen, 1-Buten, 1-Penten, 1-Hexen, 1-Octen, 1-Decen oder 1-Undecen.

Als Comonomere sind α-Olefine geeignet, wie beispielsweise 0,1 bis 20 mol-% 1-Buten, 1-Penten, 1-Hexen, 4-Methyl-1-Penten, 1-Octen, 1-Decen oder 1-Undecen. Aber auch Isobuten und Styrol sind geeignete Comonomere; des weiteren interne Olefine wie beispielsweise Cyclopenten, Cyclohexen, Norbornen und Norbornadien.

Die erfindungsgemäßen Katalysatoren haben sich weiterhin als Wasserstoff-regelbar erwiesen, d.h. durch Zugabe von Wasserstoff lässt sich das Molekulargewicht der durch die erfindungsgemäßen Katalysatoren erhältlichen Polymere senken: Bei genügend Wasserstoffzugabe werden Wachse erhalten, wobei die erforderliche Wasserstoffkonzentration auch von der Art der verwendeten Polymerisationsanlage abhängt. Bei Wasserstoffzugabe steigt die Aktivität der erfindungsgemäßen Katalysatoren.

Die erfindungsgemäßen Katalysatoren können auch gemeinsam mit einem oder mehreren anderen, an sich bekannten Polymerisationskatalysatören verwendet werden. So können sie zusammen mit
- Ziegler-Natta-Katalysatoren,
- geträgerten Metallocenkatalysatoren der Übergangsmetalle der Gruppen 4 bis 6 des Periodensystems der Elemente,
- Katalysatoren der späten Übergangsmetalle (WO 96/23010),
- Fe- oder Co-Komplexen mit Pyridyldiiminliganden, wie sie in WO 98/27124 offenbart werden,
- oder auch Chromoxidkatalysatoren nach Phillips eingesetzt werden.

Dabei ist es einerseits möglich, verschiedene Katalysatoren mit-einander zu mischen und gemeinsam zu dosieren oder cogeträgerte Komplexe auf einem gemeinsamen Träger zu verwenden oder auch verschiedene Katalysatoren getrennt an derselben oder an verschiedenen Stellen in das Polymerisationsgefäß zu dosieren. Nachfolgende Arbeitsbeispiele erläutern die Erfindung.

### Allgemeine Vorbemerkungen:

Alle Arbeiten wurden, wenn nicht anders beschrieben, unter Ausschluss von Luft und Feuchtigkeit unter Verwendung von Standard-Schlenk-Techniken hergestellt. Geräte und Chemikalien waren entsprechend vorbereitet. Die Polymerviskosität wurde nach ISO 1628-3 bestimmt.

### 1. Darstellung der Liganden:

### 1.1 Darstellung der Imine

Die Imine wurden je nach Reaktivität der eingesetzten Edukte nach 3 Methoden hergestellt:
1. Methode: In einem 250-ml-Rundkolben mit Wasserabscheider wurden die Edukte - 4,97 g Acetophenon (41,4 mmol), 7,33 g 2,6-Diisopropylanilin (41,4 mmol) - vorgelegt, in 70 ml Toluol gelöst und nach Zugabe von 500 mg p-Toluolsulfonsäure 2 h unter Rückfluss erhitzt. Die orangefarbene Lösung wurde 2 x mit H₂O, dann 1 x 10 % NaHCO₃-Lösung neutralgewaschen. Die organische Phase wurde über Na₂SO₄ getrocknet. Nach Abzug des Lösungsmittels am Rotationsverdampfer wurden Spuren von Toluol sowie nicht umgesetztes Amin und Keton im Hochvakuum zwischen 105 und 115°C abgezogen. Das ölige Imin kristallisierte über Nacht aus.
   Nach dieser Methode wurde hergestellt: Imin III.1 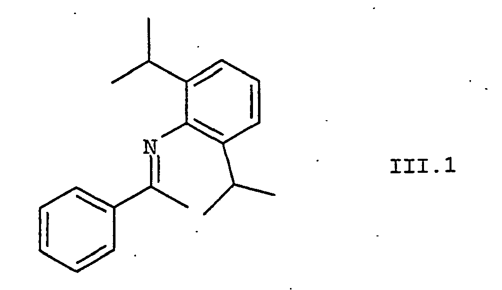 Ausbeute: 84.6 %, Summenformel: C₂₀H₂₅N, Farbe: gelb, Schmp: 68 - 69°C
   1H NMR (CDCl₃): 1,21 (12H, m, 4 x CH₃), 2,16 (3H, s, CH₃), 2,83 (2H, Sept., CH), 7,11 - 8,12 (8H, m, Phenyl)
   13C NMR (CDCl₃): 18,0, 22,9, 23,2, 28,2, 122,9, 123,3, 127,1, 128,4, 130,3, 136,0, 139,1, 146,7, 164,7 (C=N)
   IR (KBr, cm⁻¹): 3056 (w), 2958 (m), 2867 (m), 1630 (s), 1578 (s), 1449 (s), 1366 (m), 1289 (s), 1243 (m), 1192 (m), 1111 (w), 1044 (w), 1027 (m), 969 (w), 938 (m), 822 (m), 774 (vs), 760 (vs), 735 (s), 693 (vs)
   M⁺ = 279,2 m/z
2. Methode: In einem 50-ml-Rundkolben wurden die Edukte - 0,19 g N-Aminopyrrol (2,3 mmol), 0,28 g Acetophenon (2,3 mmol) - vorgelegt, in 1 ml Ethanol gelöst und nach Zugabe von 3 Tropfen Ameisensäure 30 Minuten bei Raumtemperatur gerührt. Durch Abdestillieren des Lösungsmittels und der Ameisensäure wurde das hochreine, weißgelbe Imin isoliert.
   Nach dieser Methode wurde hergestellt: Imin III.2 (aus W. Flitsch et al., Chem. Ber. 1969, 102, 3268 - 3276). 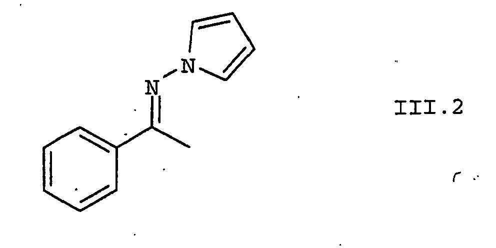 Ausbeute: 89 %, Summenformel: C₁₂H₁₂N₂, Farbe: weißbeige, Schmp: 61 °C
   1H NMR (CDCl₃): 2,43 (3H, s, CH₃) ; 6, 25 - 7,95 (9H, m, Phenyl, Pyrrolyl)
   13C NMR (CDCl₃): 16,7 (CH₃), 106,8, 118,2, 127,0, 128,5, 130,7, 137,3 (Phenyl, Pyrrolyl), 166.5 (C=N)
   IR (KBr, cm⁻¹): 3132 (w), 1605 (s), 1573 (m), 1445 (m), 1306 (s), 1082 (vs), 1067 (s), 988 (s), 924 (m), 818 (m), 766 (s), 716 (vs), 688 (vs)
3. Methode (Aus: B. Bildstein, et al. Synthesis 1994, 2, 157-160): In ein ausgeheiztes, mit Argon gespültes Schlenkrohr wurden 10,6 ml 2,6-Diisopropylanilin (106 mmol) vorgelegt und in 50 ml absolutem Toluol gelöst. Nach Zugabe von Trimethylaluminium (53 ml, 2,0 M Lösung in Toluol, 1 Äquivalent, bezogen auf Diisopropylanilin) wurde die schäumende Lösung 90 min bei 80°C gerührt. Nachdem kein Entweichen von Methan mehr beobachtet werden konnte, wurde die Lösung auf Raumtemperatur abgekühlt und mit 6,2 ml Acetophenon (53 mmol) versetzt (sofortiger Farbumschlag: hellgelb - gelb). Nach 1/2 h Rühren bei Raumtemperatur wurde die Lösung auf 0°C abgekühlt und vorsichtig mit kleinen Wassermengen (portionsweise) hydrolisiert. Das weiße Al(OH)₃ wurde 3 x mit 5 % KOH weggewaschen. Die organische Phase wurde anschließend 3 x mit H₂O gewaschen, abgetrennt und über Na₂SO₄ getrocknet. Nach Entfernung des Trockenmittels durch Filtration wurde das Lösungsmittel am Rotationsverdampfer abdestilliert. Der gelbe, ölige Rückstand wurde mit Hexan versetzt und in die Tiefkühltruhe (-30 °C) gestellt. Das Imin kristallisierte über Nacht aus.

Nach dieser Methode wurden die Imine III.3 bis III.6 hergestellt. 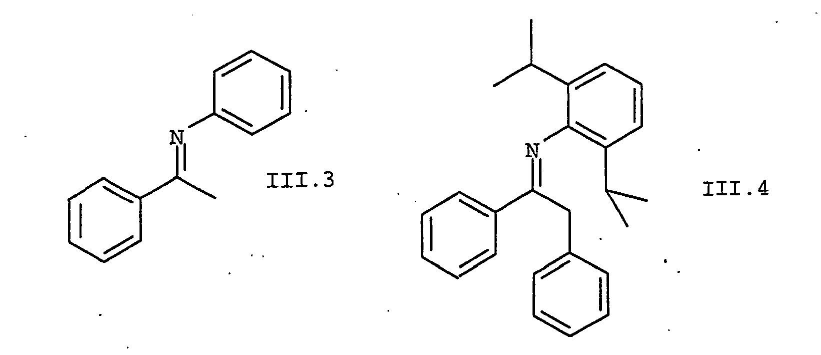 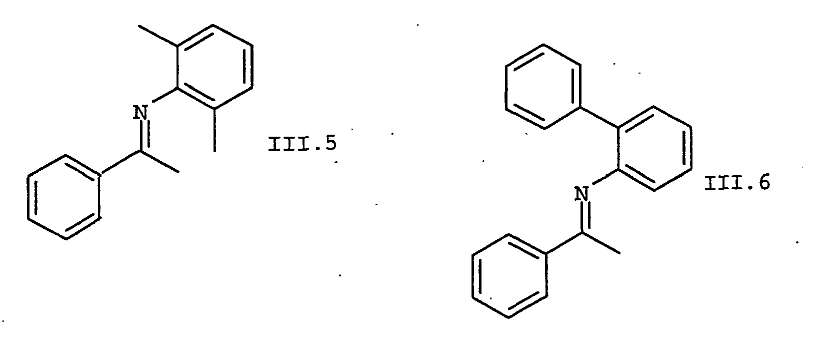 Imin III.3: Ausbeute: 36 %, Summenformel: C₁₄H₁₃N, Farbe: gelb 1H NMR (CDCl₃):2.24 (3H, s, CH₃); 6.81 - 8.02 (10H, m, Phenyl) 13C NMR (CDCl₃):17.3 (CH₃); 115.0, 119.3, 123.1, 127.1, 128.3, 128.9, 129.2, 130.4, 139.4, 151.6 (Phenyl); 165.4 (C=N) IR (KBr, cm⁻¹): 1629 (s), 1592 (s), 1576 (m), 1447 (m), 1289 (m), 1214 (s), 1075 (s), 1025 (s), 909 (m), 812 (m), 783 (s), 760 (vs), 733 (s), 693 (vs)

Die Angaben stimmen mit den Literaturdaten überein: A. Cobas et al., J. Org. Chem. 1993, 58, 3113 - 3117; M. Sato, et al., Chem. Lett. 1992, 3, 485; Reddelien, Chem. Ber. 1910, 43, 2478.
Imin III.4: Ausbeute: 73 %, Summenformel: C₂₆H₂₉N , Farbe: zitronengelb, Schmp.: 82-83 °C
1H NMR (CDCl₃) : 1.07 (6H, d, CH₃ - Phenyl), 1.04 (6H, d, CH₃ - Phenyl), 2.66 (2H, sept, CH); 3.84 (2H, s, CH₂); 6.80 - 7.92 (13H, m, Phenyl)
13C NMR (CDCl₃):22.0, 23.7, 28.3, 36.8, 122.8, 123.5, 126.1, 128.1, 128.3, 128.4, 128.9, 130.1, 136.0, 136.2, 138.6, 146.0 (Phenyl), 165.8 (C=N)
IR (KBr, cm⁻¹): 3066 (m), 3035 (w), 2962 (m), 2931 (m), 2867 (m), 1626 (vs), 1576 (s), 1497 (m), 1447 (s), 1431 (s), 1362 (m), 1297 (m), 1237 (m), 1192 (s), 1023 (m), 826 (m), 785 (vs), 768 (vs), 749 (s), 733 (vs), 698 (vs)

Imin III.5: Ausbeute: 42 %, Summenformel: C₁₆H₁₇N, Farbe: gelb 1H NMR (CDCl₃) : 1,96 (6H, s, 2 x CH₃) ; 1,99 (3H, s, CH₃) , 6,82 - 7,97 (8H, m, Phenyl)
13C NMR (CDCl₃): 17,4 (CH₃), 17,9 (2 x CH₃), 117,9, 121,5, 122,7, 125,6, 127,0, 127,7, 128,1, 128,3, 130,4, 139,0, 148.9 (Phenyl), 165,1 (C=N)

Die Daten stimmen mit den Literaturangaben überein: P. Schnider et al. Chem. Eur. J. 1997, 3, 887.

Imin III.6: Ausbeute: 51 %, Summenformel: C₂₀H₁₇N, Farbe: beige, Schmp: 57 - 58 °C
1H NMR (CDCl₃): 2,03 (3H, s, CH₃); 6,86 - 7,50 (14H, m, Phenyl) 13C NMR (CDCl₃): 18,0 (CH₃), 119,9, 123,7, 126,5, 127,0, 127,9, 128,0, 128,2, 129,1, 130,2, 130,3, 131,7, 139,4, 139,9, 149,1 (Phenyl), 165,3 (C=N)
IR (KBr, cm-¹) : 3056 (w), 3018 (w), 1652 (m), 1636 (vs), 1596 (m), 1578 (m), 1472 (s), 1447 (s), 1432 (m), 1362 (s), 1291 (s), 1241 (s), 1113 (m), 1075 (m), 1025 (m), 920 (m), 824 (m), 787 (m), 776 (m), 760 (vs), 747 (vs), 702 (vs), 691 (vs)
M⁺ = 271.2 m/z

### 1.2. Synthese der Liganden der Formel II

### Allgemeine Arbeitsvorschrift am Beispiel des Liganden II.1

In ein ausgeheiztes und mit Argon gespültes Schlenkrohr wurden 0,18 ml Diisopropylamin (1,3 mmol) vorgelegt, in 10 ml THF (absolut) gelöst und bei - 80 °C mit n-BuLi (0,72 ml, 1,1 Äquivalente, 2.0 M Lösung in Pentan) versetzt. Nach Entfernen des Kältebades (EtOH, N₂) wurde die entstehende LDA-Lösung ½ h bei Raumtemperatur gerührt.

Das Imin III.1 (0,36 g, 1,30 mmol) wurde der frisch hergestellten LDA-Lösung bei -80°C zugegeben. Nach Entfernung des Kältebades wurde das gelöste Edukt 2 h bei Raumtemperatur gerührt und dadurch deprotoniert (Farbwechsel: gelblich - gelbgrün). 0,24 g Benzophenon (1,3 mmol) wurden anschließend bei Raumtemperatur zugegeben und über Nacht gerührt.

Die gelbe THF-Lösung wurde dann auf 100 ml Eiswasser gegossen und 3 x mit je 25 ml Diethylether extrahiert. Die vereinigten organischen Phasen wurden mit H₂O gewaschen, über Na₂SO₄ getrocknet und die organischen Lösungsmittel am Rotavapor abgetrennt. Das gelbe Produkt kristallisierte innerhalb von 2 h aus. Anschließende Um-kristallisation aus Essigester/Hexan lieferte das reine β-Hydroxyimin.

Nach dieser Methode wurden die folgenden β-Hydroxyimine II.1-8 hergestellt:
Ligand II.1 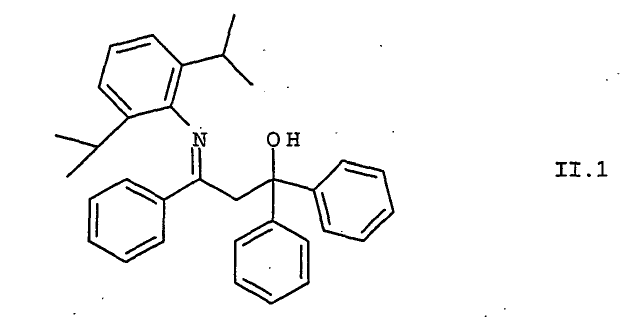 Ausbeute: 72 %, Summenformel: C₃₃H₃₅NO, Farbe: -weißgelb, Schmp: 121 - 122 °C
   1H NMR (CDCl₃): 0,61 (6H, d, 2 x CH₃), 0,82 (6H, d, 2x CH₃), 2,19 (2H, sept, CH), 3,76 (2H, s, CH₂), 6,80 - 7,51 (19H, m, Phenyl, OH)
   13C NMR (CDCl₃): 22,0, -24,5, 27,9 (CH₃, CH), 48,4 (CH₂), 78,5 (C-OH), 122,9, 124,2, 126,0, 126,7, 127,0, 128,1, 128.2, 128,3, 129,5, 130,0, 132,4, 136,8, 137,6, 143,6, 147,4 (Phenyl), 170,4 (C=N)
   IR (KBr, cm⁻¹) : 3288 (m, breit), 3062 (w), 2962 (m), 2925 (w) , 2867 (m), 1634 (vs), 1492 (m), 1453 (vs), 1343 (m), 1227 (m), 1065 (m), 1042 (s), 1015 (s), 942 (s), 917 (m), 899 (s), 805 (m), 749 (vs), 700 (vs) , 637 (s) M⁺ = 461,3 m/z
Ligand II.2: 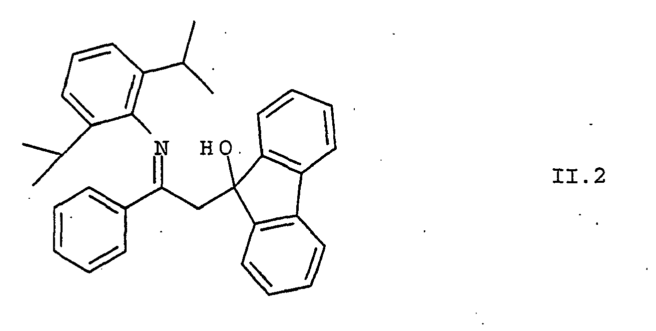 Ausbeute: 96 %, Summenformel: C₃₃H₃₃NO , Farbe: hellgelb, Schmp: 92 - 94 °C
   1H NMR (CDCl₃): 0,76 (3H, d, CH₃), 1,07 (3H, d, CH₃), 1,09 (3H, d, CH₃), 1,16 (3H, s, CH3), 2,69, 2,85 (2H, 2 x sept, 2 x CH), 3,44 (2H, s, CH₂), 6,85 - 7,98 (16H, m, Phenyl, Fluorenyl)
   13C NMR (CDCl₃): 22,3, 22,9, 23,2, 24,8, 28,2, 28,3 (2 x CH, 4 x CH₃), 47,9 (CH2), 81,6 (C-OH), 119,9, 120,2, 122,9, 123,2, 123,3, 124,2, 124,5, 124,6, 127,1, 127,7, 128,0, 128,4, 128,8, 129,0, 129,4, 130,3, 134,6, 136.0, 136,8, 139,4, 149,3 (Phenyl, Fluorenyl), 170,0 (C=N)
   IR (KBr, cm⁻¹): 3305 (m, breit), 3066 (w), 3022 (w), 2962 (m), 2925 (m), 2865 (m), 1646 (s), 1623 (s), 1589 (m), 1451 (vs), 1381 (m), 1360 (m), 1216 (m), 1069 (m), 1025 (vs), 1011 (s), 936 (m), 851 (m), 793 (s), 770 (vs), 762 (vs), 698 (vs)
Ligand II.3 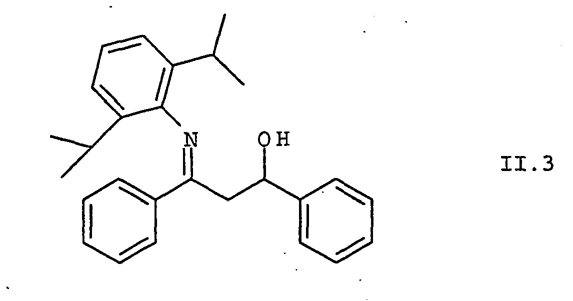 Ausbeute: 59 %, Summenformel: C₂₇H₃₁NO , Farbe: weiß, Schmp: 69 -71°C
   1H NMR (CDCl₃): 0,67 - 1,20 (m, 4 x CH₃), 2,60, 2,88 (2 x sept, CH), 6,58 - 7,70 (m, Phenyl)
   IR (KBr, cm⁻¹): 3247 (m, breit, OH), 3064 (w), 3033 (w), 2958 (s), 1632 (vs), 1457 (s), 1320 (m), 1299 (m), 1184 (m), 1069 (s), 1025 (m), 822 (s), 764 (s), 700 (vs)
   M⁺ = 386.2 m/z
Ligand II.4 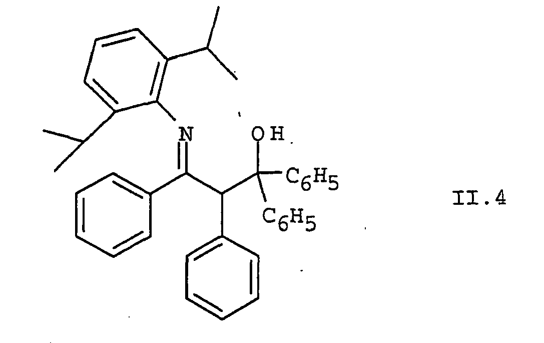 Ausbeute: 72 %, Summenformel: C₃₉H₃₉NO, Farbe: weiß, Schmp: 165 °C 1H NMR (CDCl₃): 0,24 (3H, d, CH₃), 0,76 (3H, d, CH₃), 0,93 (3H, d, CH₃), 1,04 (3H, d, CH₃), 1,82 (1H, sept, CH), 2,48 (1H, sept, CH), 5,1 (1H, s, CH-Phenyl), 6,81 - 7,70 (24H, m, Phenyl, OH)
   13C NMR (CDCl₃): 21,6, 22,1, 24,9, 25,0 (4 x CH₃), 27,0, 27,7 (2 x CH), 61,1 (CH-Phenyl), 82,3 (C-OH), 122,5, 123,6, 124,4, 125,9, 126,0, 126,9, 127,0, 127,1, 127,2, 127,5, 128,0, 128,1, 129,1, 131,0, 135,5, 136,1, 138,9, 139,4, 143,1, 145,1, 148,5 (Phenyl), 173,8 (C=N)
   IR (KBr, cm⁻¹): 3305 (m, breit), 3058 (w), 3027 (w), 2983 (m), 2956 (m), 2927 (w), 2867 (w), 1632 (vs), 1600 (m), 1493 (m), 1451 (s), 1439 (m), 1383 (m), 1328 (m), 1252 (m), 1219 (m), 1177 (m), 1063 (m), 1042 (m), 803 (m), 780 (m), 768 (s), 749 (s), 729 (s), 698 (vs)
Ligand II.5 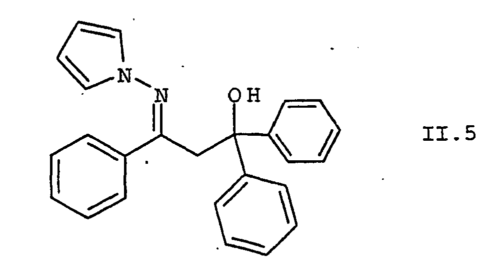 Abweichend von der allgemeinen Arbeitsvorschrift wurde die THF-Lösung des Liganden nicht mit Ether extrahiert, sondern zunächst auf Eis gegossen, danach 2x mit je 5 ml Hexan digeriert und 10 min am Rückfluss erhitzt. Nach dem Abkühlen fiel der Ligand als weißgelbes Pulver aus.
   Ausbeute: 55 %, Summenformel: C₂₅H₂₂N₂O, Farbe: weißgelb, Schmp.: 120-122 °C
   1H NMR (CDCl₃): 3,67 (2H, s, CH₂), 5,92 (2H, t, Pyrrolyl), 6,04 (1H, s, OH), 6,24 (2H, t, Pyrrolyl), 7,0 - 7,54 (15H, m, Phenyl) 13C NMR (CDCl₃): 49,1 (CH₂), 78,0 (C-OH), 106,8, 118,6, 125,9, 126,0, 126,8, 128,1, 129,0, 129,6, 136,6, 146,5, 164,6 (C=N) IR (KBr, cm⁻¹): 3388 (s), 1611 (m), 1493 (s), 1464 (s), 1449 (s), 1400 (s), 1261 (m), 1246 (s), 1232 (m), 1178 (m), 1072 (s), 1014 (m), 964 (m), 939 (m), 904 (m), 772 (s), 766 (s), 754 (s), 727 (s), 698 (s)
   M⁺ = 366,2 m/z
Ligand II.6: 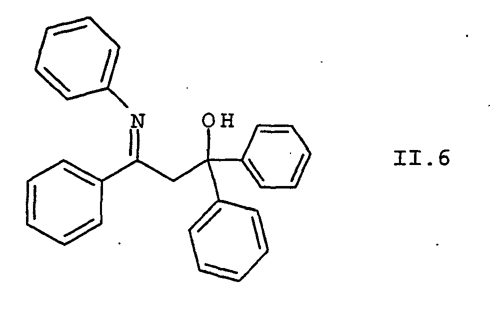 Abweichend von der allgemeinen Arbeitsvorschrift wurde die THF-Lösung des Liganden nicht mit Ether extrahiert, sondern zunächst auf Eis gegossen, danach 2x mit je 5 ml Hexan digeriert und 10 min am Rückfluss erhitzt. Nach dem Abkühlen fiel der Ligand als weißgelbes Pulver aus.
   Ausbeute: 57 %, Summenformel: C₂₇H₂₃NO, Farbe: weißgelb 1H NMR (CDCl₃): 3,72 (.2H, s, CH₂), 6,38 - 7,58 (21H, m, Phenyl, OH)
   13C NMR (CDCl₃): 49,3 (CH₂), 78,3 (C-OH), 120,8, 123,7, 126,1, 126,6, 127,1, 128,0, 128,1, 128,2, 128,3, 128,4, 128,8, 130,0, 132,4, 137,7, 147,0, 148,6 (Phenyl), 171,7 (C=N)
   IR (KBr, cm⁻¹): 3234 (breit), 3083 (w), 3058 (w), 3031 (w), 1638 (s), 1591 (s), 1489 (s), 1453 (s), 1430 (m), 1337 (m), 1229 (s), 1189 (m), 1177 (m), 1079 (m), 1063 (s), 1023 (m), 1015 (s), 940 (s), 909 (s), 778 (s), 753 (s), 739 (m), 700 (vs), 631 (s)
   M⁺ = 377,2 m/z
Ligand II.7 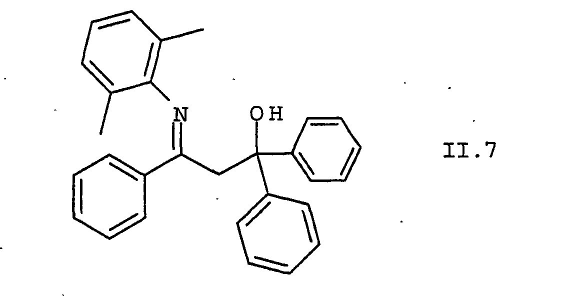 Abweichend von der allgemeinen Vorschrift wurde der Ligand II.7 - aus Diethylether umkristallisiert.
   Ausbeute: 88 %, Summenformel: C₂₉H₂₇NO, Farbe.: weißgelb; Schmp: 104 - 105°C (Et₂O)
   1H NMR (CDCl₃): 1,61 (6H, s, CH₃), 3,81 (2H, s, CH₂), 6,79 - 7,61 (19H, m; Phenyl, OH)
   13C NMR (CDCl₃): 17,8 (CH₃), 48,6 (CH₂), 78,3 (C-OH), -123,4, 126,0, 126,2, 126,5, 126,6, 127,7, 128,2, 129,5, 138,2, 146,6, 147,3 (Phenyl), 170,5 (C=N)
   IR (KBr, cm⁻¹): 3305 (breit), 3060 (w), 3027 (w), 2968 (w), 2943 (w), 1640 (vs), 1594 (m), 1493 (m), 1451 (s), 1378 (m), 1347 (m), 1225 (m) 1200 (m), 1183 (m), 1065 (m), 1044 (m), 1013 (m), 940 (m), 903 (s), 776 (vs), 747 (s), 700 (vs), 633 (m)
   M⁺ = 405,54 m/z
Ligand II.8

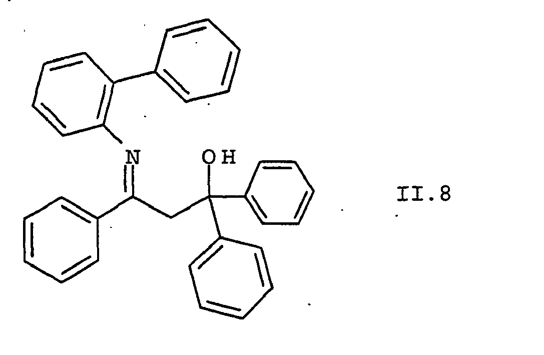

Abweichend von der allgemeinen Vorschrift wurde der Ligand II.8 aus Diethylether/Hexan umkristallisiert.
Ausbeute: 61 %, Summenformel: C₃₃H₂₇NO , braunes Öl
1H NMR (CDCl₃): 3,43 (2H, s, CH₂), 6,27 - 7,73 (25H, m, Phenyl + OH)
13C NMR (CDCl₃): 48,6 (CH₂), 78,1 (C-OH), 121,6, 124,3, 126,0, 126,5, 127,0, 127,5, 127,8, 127,9, 128,1, 128,2, 128,6, 128,9, 129,1, 130,0, 132,4, 132,5, 137,9, 139,4, 146,3, 147,1 (Phenyl), 171,9 (C=N)

**Tabelle 1: Übersicht über Liganden der Formel II**

| Ligand | R¹ | R² | R³ | R⁴ | R⁵ | R⁶ | Nu |
|---|---|---|---|---|---|---|---|
| II.1 | Ph | H | H | Ph | Ph | (C₃H₈)₂Ar | O |
| II.2 | Ph | H | H | 9,9-Fluorenyl | | (C₃H₈)₂Ar | O |
| II.3 | Ph | H | H | H | Ph | (C₃H₈)₂Ar | O |
| II.4 | Ph | Ph | H | . Ph | Ph | (C₃H₈) ₂Ar | O |
| II.5 | Ph | H | H | Ph | Ph | N-Pyrrolyl | O |
| II.6 | Ph | H | H | Ph | Ph | Ph | O |
| II.7 | Ph | H | H | Ph | Ph | Me₂Ar | O |
| II.8 | Ph | H | H | Ph | Ph | Biphen | O |

| | | | | | | | |
|---|---|---|---|---|---|---|---|
| Abkürzungen: Ph = Phenyl, (C₃H₈)₂Ar: 2,6-Diisopropylphenyl, Me₂Ar: 2,6-Dimethylphenyl, Biphen: ortho-Biphenyl | | | | | | | |

### 2. Synthese ausgewählter Komplexverbindungen der Formel I a und I b

### Allgemeine Arbeitsvorschrift am Beispiel des Komplexes I.b.1

In einem ausgeheizten und mit Argon gespülten Schlenkrohr wurde der Ligand II.1 (1,07 g, 2,32 mmol) vorgelegt, in 20 ml THF (absolut) gelöst und bei - 80°C im Kältebad (EtOH, N₂) mittels n-BuLi (1,2 ml, 2,4 mmol, 2.0 M in Pentan) deprotoniert. Nach Entfernung des Kältebades wurde die Lösung bei Raumtemperatur 1 h gerührt (Farbwechsel: gelb - hellrot).

Nach Zugabe des Übergangsmetallhalogenids (ZrCl₄, 0,27g, 1,12 mmol, 0,5 Äquivalente) bei - 80 °C wurde die Lösung beim Anwärmen innerhalb von 1 h dunkelrot. Es wurde 18 h gerührt.

Das THF wurde anschließend im Hochvakuum abdestilliert, der orangebraune Rückstand in 50 ml Toluol (absolut) suspendiert. Das bei der Reaktion entstehende LiCl wurde aus der Suspension durch Filtration entfernt. Die Lösung wurde anschließend im Hochvakuum bis zur Trockne eingeengt, der Rückstand 3 x mit 10 ml Hexan (absolut) digeriert und gewaschen. Das Lösungsmittel wurde abgehebert, der pulvrige, orange Komplex I.b.1 im Hochvakuum getrocknet.

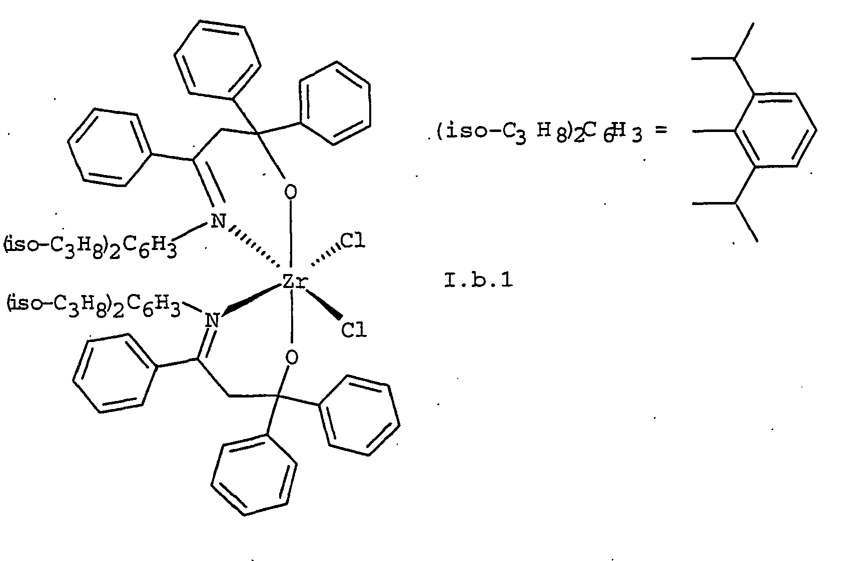

### Komplex I.b.1

Ausbeute: 39 %, Summenformel: C₆₆H₆₈Cl₂N₂O₂Zr, Farbe: orange
1H NMR (Benzol-d₆): 1,11, 1,29 (12H, 2 xd, 4 x CH₃, J = 6.6 Hz), 1,17, 1,26 (12H, 2 x d, 4 x CH₃, J = 7.4 Hz), 1,80 (4H, s, 2 x CH₂), 2,87, 3,28 (4H, 2 x sept, 4 x CH) , 6,71 - 8, 02 (36H, m, Phenyl)
MS: (LH₂⁺ + LH)-ZrCl₂ = 923,7 m/z, (LH₂⁺ + LH - H₂O)-ZrCl₂ = 905,7 m/z, L = Ligand

### Komplex I.a.1

### Allgemeine Bemerkung:

Zur Synthese von Komplexen der allgemeinen Formel I a wurde jeweils 1 Äquivalent MCl₄, bezogen auf Ligand der Formel II, eingesetzt.
Ausbeute: 49 %, Summenformel: C₃₃H₃₄Cl₃NOZr, Farbe: orangebraun
1H NMR (Benzol-d₆): 1,10 (3H, d, CH₃, J = 6,7 Hz), 1,18 (3H, d, CH₃, J = 7,1: Hz), 1.21 (3H, d, CH₃, J = 6,7 Hz) , 1,36 (3H, d, CH₃, J = 6,4 Hz), 1,85, 2,10 (2H, 2 x s, CH₂, 2 Isomere), 2,86, 3,33 (2H, 2 x sept, 2 x CH, 2 Isomere), 6,57 - 8,08 (18H, m, Phenyl) Komplex I.a.2

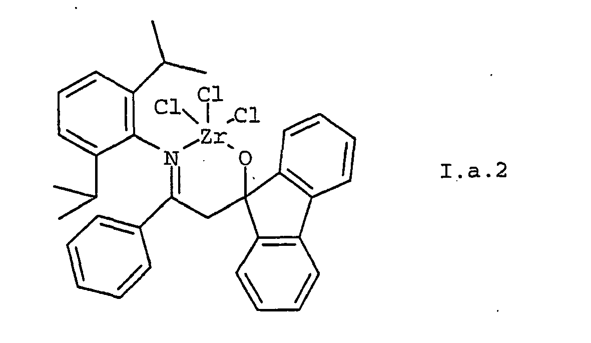

Ausbeute: 67 %, Summenformel: C₃₃H₃₂Cl₃NOZr, Farbe: gelb 1H NMR (Benzol-d₆): 0,90, 1,12 (6H, 2 x d, 2 x CH₃, J = 6,9 Hz), 1.17, 1.21 (6H, 2 x d, 2 x CH₃, J = 7,1 Hz), 1,85, 2,10 (2H, 2 x s, CH₂, 2 Isomere - Verhältnis 1: 2), 2,83, 3,21 (2H, 2 x sept, 2 x CH, 2 Isomere im Verhältnis 1:2), 6,68 - 8,28 (16H, m, Phenyl) MS: (L⁺ - H₂O) = 442.2 m/z, L:Ligand
Elementaranalyse gefunden (berechnet): C, 59,4 (60,4); H, 5,8 (4, 9) ; N, 1,4 (2,1)

### Komplex I.a.3

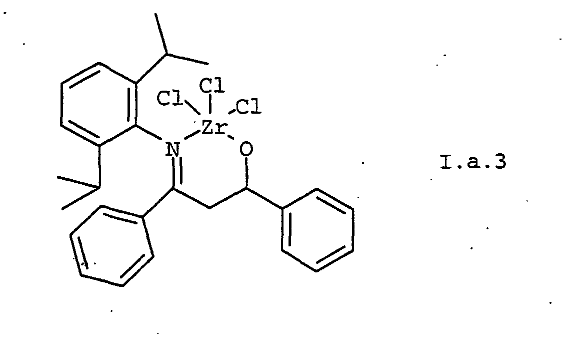

Ausbeute: 52 %, Summenformel: C₂₇H₃₀Cl₃NOZr, Farbe: gelb
1H NMR (Benzol-d₆): 0,88 - 1,42 (12H, 4 x d, 4 x CH₃), 1,80, 2,10 (2H, 2 x s, CH₂, 2 Isomere), 2,86 - 3,19 (1H, m, CH-Phenyl), 3,56 (2H, CH₂), 6,81 - 8,02 (13H, m, Phenyl)
MS: (L⁺ - H₂O) = 368,3 m/z, L: Ligand

### Komplex I.a.4

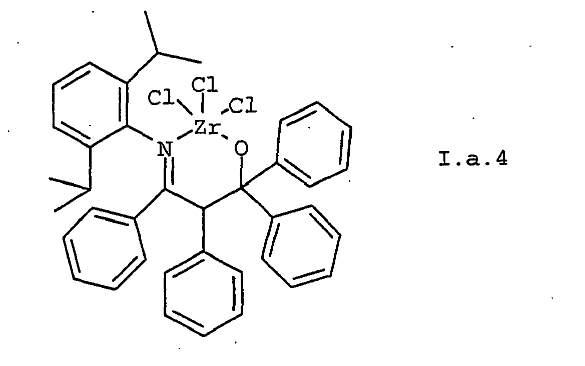

Ausbeute: 49 %, Summenformel: C₃₉H₃₈Cl₃NOZr, Farbe: weißgelb
1H NMR (Benzol-d₆): 0,73 - 1,26 (m), 0,27 (m), 6,73 - 8,23 (m)

### Komplex I.a.5

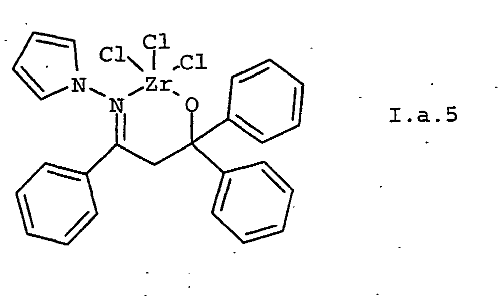

Ausbeute: 50 %, Summenformel: C₂₅H₂₁Cl₃N₂OZr, Farbe: ziegelrot
1H NMR (CD₂Cl₂): 2,34, 3,58 (CH₂, 2 Isomere), 5,85 (Pyrrol), 6,19
(Pyrrol), 7,10 - 7,78 (m, aromatisch)
MS: (L⁺ - H₂O) = 349,2 m/z
Elementaranalyse gefunden (berechnet): C, 54,6 (53,3); H, 4,6 (3,8); N, 4,1 (5,0)

### Komplex I.a.6

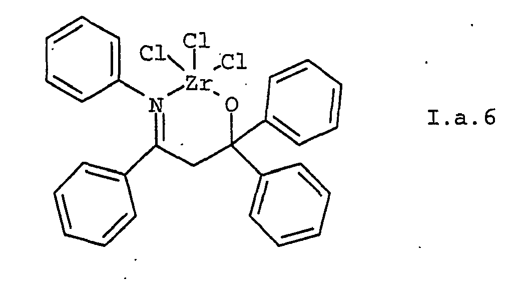

Ausbeute; 82 %, Summenformel: C₂₇H₂₂Cl₃NOZr, Farbe: gelb
1H NMR (CD₂Cl₂): 2,29 (CH₂), 6,70 - 8,03 (m, Phenyl)
MS : (L⁺ - H₂O) = 360,2 m/z

### Komplex I.a.7

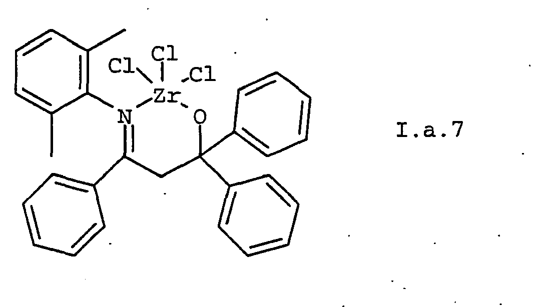

Ausbeute: 63 %, Summenformel: C₂₉H₂₆Cl₃NOZr, Farbe: gelb
1H NMR (CD₂Cl₂): 2,08, 2,23, 2,39, 6,41, 6,99 - 8,14 (m, Phenyl) MS: (M⁺ -ZrCl₃) = 406.3, (L⁺ - H₂O) = 388.2 m/z

### Komplex I.a.8

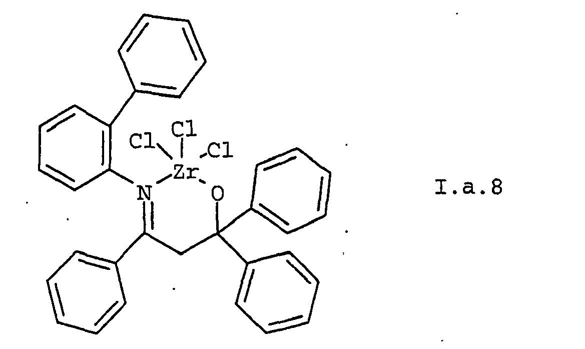

Ausbeute: 71 %, Summenformel: C₃₃H₂₆Cl₃NOZr, Farbe: gelb
1H NMR (CD₂Cl₂): 3,67 (2H, s, CH₂), 5,92 - 7,85 (24H, m, Phenyl) MS: (L⁺ - H₂O) = 463.25 m/z

### Komplex I.a.9

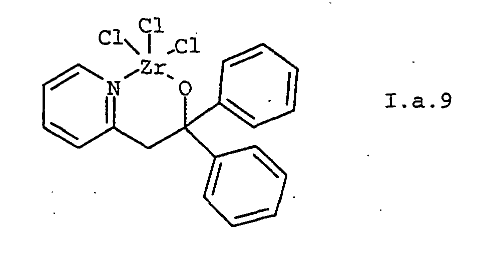

Der Ligand wurde nach Tilford, J. Am. Chem. Soc. 1954, 76, 2431 und ibido, 1954, 76, 2436 synthetisiert.

Ausbeute: 80 %, Summenformel: C₁₉H₁₆Cl₃NOZr, Farbe: hellbeige 1H NMR (CD₂Cl₂): 2,33, 6,73 - 7,59 (m), 9,18 (d), 9,40 - 9,46 (m)

### Komplex I.a.10

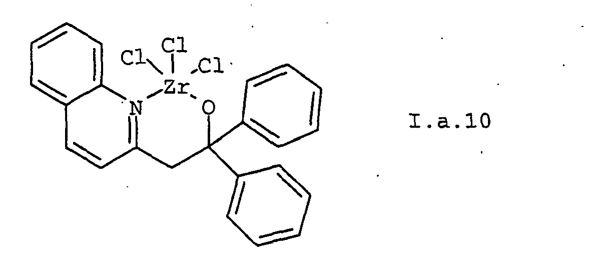

Der Ligand wurde nach Tilford, J. Am. Chem. Soc. 1954, 76, 2431 und ibido, 1954, 76, 2436 synthetisiert.

Ausbeute: 83 %, Sumnenformel:C₂₃H₁₈Cl₃NOZr, Farbe: zitronengelb
1H NMR (CD₂Cl₂): 1,88 (8H, s, 4 x CH₂, 2 koordinierende THF), 3,79 (10H, s, breit, 4 x CH₂-O, 2 koordinierende THF, CH₂, Ligand), 6,80 - 8,36 (m, aromatisch)

**Tabelle 2: Übersicht über Komplexe der Formel I a**

| Komplex | R² | R³ | R⁴ | R⁵ | R⁶ | R¹ | M | Nu |
|---|---|---|---|---|---|---|---|---|
| I.a.1 | H | H | Ph | Ph | (C₃H₈)₂ Ar | Ph | Zr | O |
| I.a.2 | H | H | 9,9-Fluorenyl | | (C₃H₈)₂ Ar | Ph | Zr | O |
| I.a.3 | H | H | H | Ph | (C₃H₈)₂ Ar | Ph | Zr | O |
| I.a.4 | Ph | H | Ph | Ph | (C₃H₈)₂ Ar | Ph | Zr | O |
| I.a.5 | H | H | Ph | Ph | N-Pyrrolyl | Ph | Zr | O |
| I.a.6 | H | H | Ph | Ph | Ph | Ph | Zr | O |
| I.a.7 | H | H | Ph | Ph | Me₂Ar | Ph | Zr | O |
| I.a.8 | H | H | Ph | Ph | Biphen | Ph | Zr | O |
| I.a.9 | H | H | Ph | Ph | -CH-CH=CH-CH- | | Zr | O |
| I.a.10 | H | H | Ph | Ph | -CH-CH=CH-CH-, substituiert mit -CH-CH=CH-CH- | | Zr | O |

### Komplex I.b.2:

Ausbeute: 51 %, Summenformel: C₆₆H₆₄Cl₂N₂O₂Zr, Farbe: orange
1H NMR (Benzol-d₆): 0,96, 1,12 (6H, 2 xd, 2 x CH₃, J = 6,8 Hz), 0,99, 1,20 (6H, 2 x d, 2 x CH₃), 1,80 (4H, s, 2 x CH₂), 2,87, 3,20 (4H, 2 x sept, 4 x CH), 6,68 - 8,28 (32H, m, Phenyl)
MS: (L⁺ - H₂O) = 441,2 m/z, L: Ligand

### Komplex I.b.3

Ausbeute: 67 %, Summenformel: C₅₄H₆₀Cl₂N₂O₂Zr, Farbe: zitronengelb 1H NMR (Benzol-d₆): 1,19 (d, CH₃) , 1,23 (d, CH₃) , 3,19 (sept, CH), 6,79 - 8,11 (m, Phenyl)
MS: (L⁺ - H₂O) = 368,3 m/z, L: Ligand

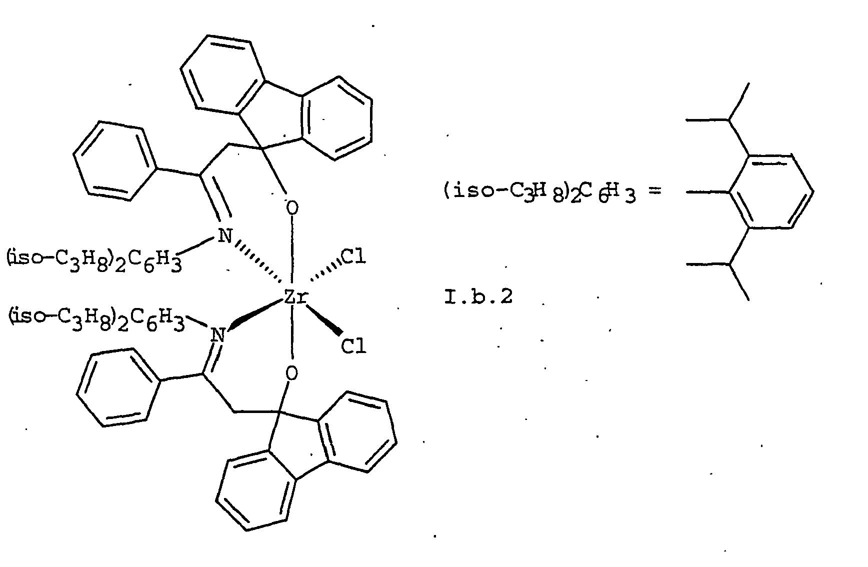

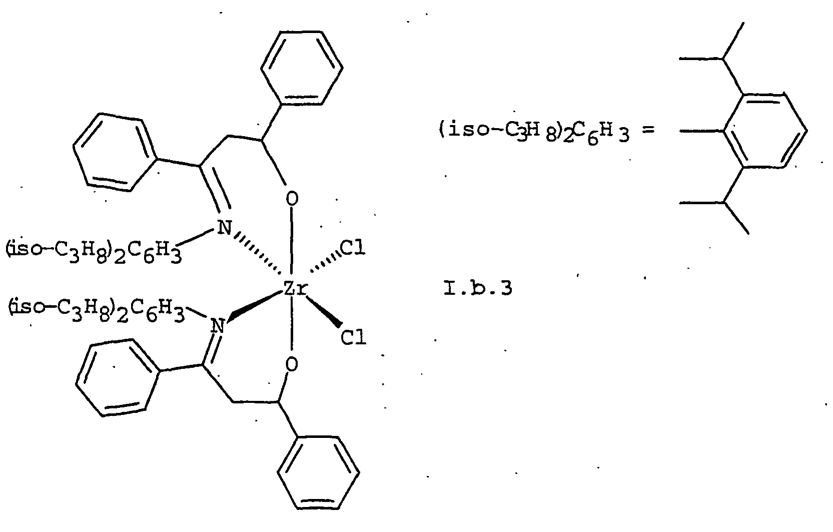

### I.b.4

Ausbeute 86 %: , Summenformel: C₃₈H₃₂Cl₂N₂O₂Zr, Farbe: hellbeige 1H NMR (CD₂Cl₂): 2,36, 6,71 - 7.38 (m), 8,54 (m).

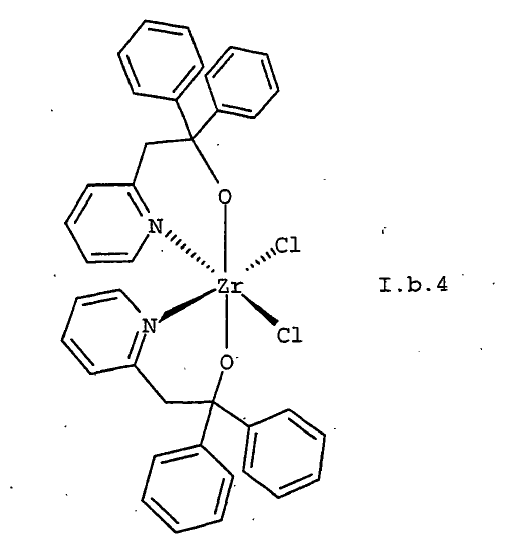

### Komplex I.b.5

Ausbeute: 48 %, Summenformel: C₄₆H₃₆Cl₂N₂O₂Zr, Farbe: beige 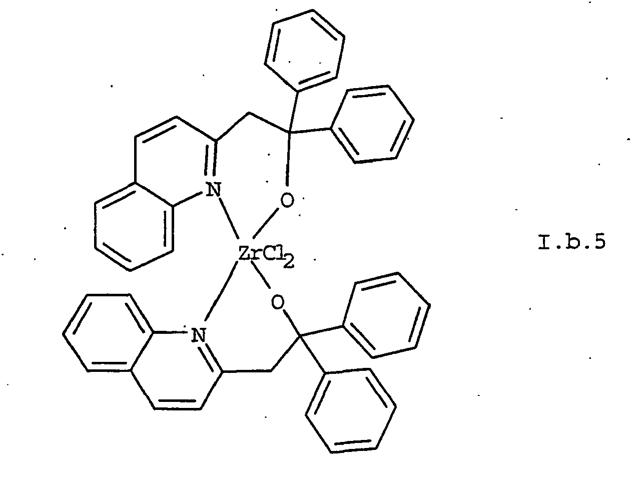 1H NMR (CD₂Cl₂): 1,81 (4H, s, 2 x CH₂, 1 koordinierendes THF), 3,70 (6H, s, 2 x CH₂-O, 1 koordinierendes THF, CH₂, Ligand), 6,80 - 8,05 (m, aromatisch)

### Komplex I.b.6

Ausbeute: 71 %, Summenformel : C₄₆H₃₆Cl₂N₂O₂Ti , Farbe: hellgrün 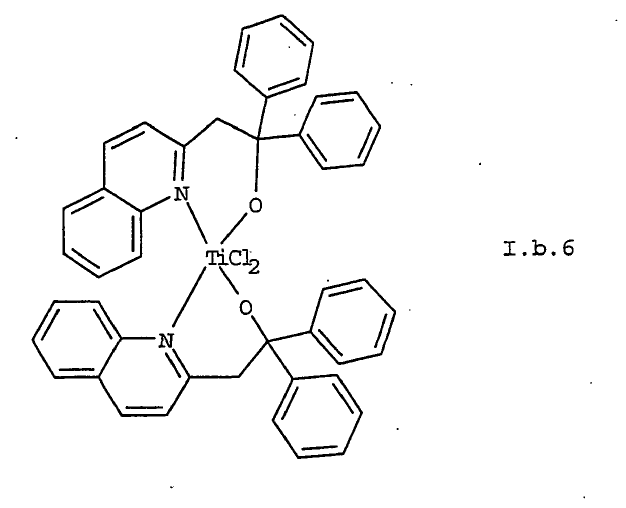 1H NMR (CD₂Cl₂): 1,31 (s), 1,87 (s, breit, THF), 3,72 (s, breit, THF), 6,59 - 8,09 (m, aromatisch)

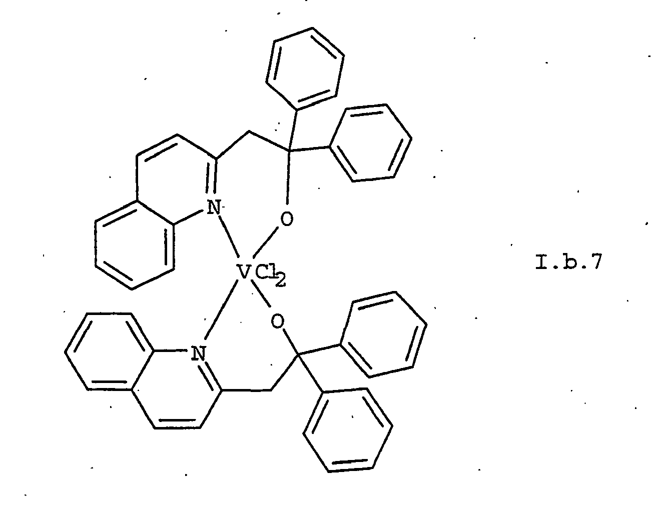

### I.b.7

Ausbeute: 53 %, Summenformel: C₄₆H₃₆Cl₂N₂O₂V, Farbe: ziegelrot
1H NMR (CD₂C1₂) : paramagnetisch, 2,0 (s, sehr breit), 7,5 (s, sehr breit)

**Tabelle 3: Übersicht über Komplexe der Formel I b**

| Komplex | R² | R³ | R⁴ | R⁵ | R⁶ | R¹ | M | Nu |
|---|---|---|---|---|---|---|---|---|
| I.b.1 | H | H | Ph | Ph | (C₃H₈)₂Ar | Ph | Zr | O |
| I.b.2 | H | H | 9,9-Fluorenyl. | | (C₃H₈)₂Ar | Ph | Zr | O |
| I.b.3 | H | H | . Ph | Ph | (C₃H₈)₂Ar | Ph | Zr | O |
| I.b.4 | H | H | Ph | Ph | -CH=CH-CH=CH- | | Zr | O |
| I.b.5 | H | H | Ph | Ph | -CH-CH=CH-CH, substituiert mit -CH=CH-CH=CH- | | Zr | O |
| I.b.6 | H | H | Ph | Ph | -CH-CH=CH-CH, substituiert mit -CH=CH-CH=CH- | | Ti | O |
| I.b.7 | H | H | Ph | Ph | -CH-CH=CH-CH, substituiert mit -CH=CH-CH=CH- | | V | O |

### 3. Polymerisationsexperimente

### 3.1.Drucklose Polymerisation

In einem inertisierten Schlenkrohr wurde eine Lösung von 20 mg des zu untersuchenden Komplexes, 1 ml Gew.-30%ige MAO-Lösung (in Toluol) und 50 ml Toluol hergestellt. Dieses Reaktionsgemisch wurde, falls nicht anders vermerkt, bei Zimmertemperatur für 90 min unter einer Ethylenatmosphäre gerührt. Es wurde vom ausgefallenen weißen Feststoff abfiltriert, der Feststoff mit Methanol gewaschen und im Vakuum getrocknet. Man erhielt das Polymer in Form eines weißen Pulvers.

### 3.2.Polymerisation im Autoklaven

In einen inertisierten 1-1-Stahlautoklaven wurden 20 mg des zu untersuchenden Komplexes, 2 ml 30 Gew.-%ige MAO-Lösung in Toluol und 400 ml Toluol gegeben. Bei 70°C wurde Ethylen bis zu einem Druck von 40 bar aufgepresst. Dieser Druck wird durch Nachdosieren von Ethylen über die Versuchsdauer von 90 min konstant gehalten. Die Reaktion wurde durch Entspannen abgebrochen und das Polymer durch Filtration, anschließendes Waschen mit Methanol und Trocken im Vakuum isoliert.

### 3.3 Ethylen-Hexen-Copolymerisation

Es wurde wie unter 3.2 verfahren, aber zu Beginn wurden mit den anderen Reagenzien 20 ml 1-Hexen in den Autoklaven gegeben.

### 3.4.Polymerisation mit Wasserstoff als Molmassenregler

Es wird wie unter 3.2 verfahren, aber zu Beginn werden 4 l Wasserstoff (unter Normalbedingungen) in den Autoklaven dosiert.

Die Ergebnisse sind in Tabelle 4 zusammengefasst.

**Tabelle 4: Polymerisationsergebnisse mit Komplexen der allgemeinen Formel I.a**

| Komplex | drucklose Ethylen-Polymerisation | | Ethylen-Polymerisation bei 40 bar | | Ethylen-Hexen-Copolymerisation | | | Einfluss von Wasserstoff auf Ethylen-Polymerisation | |
|---|---|---|---|---|---|---|---|---|---|
| | Ausbeute [g] | η-Wert [dl/g] | Ausbeute [g] | η-Wert [dl/g] | Ausbeute [g] | η-Wert [dl/gl | Hexen Einbau [Gew.-% | Ausbeute [g] | η-Wert [dl/gl] |
| I.a.1 | 1,3 | 40,2 | 11,0 | 42,0 | | | | | |
| I.a.2 | | | 19,2 | 51,9 | 23,0 | 36,5 | < 0,6 | 9,7 | 12,6 |
| I.a.3 | 1,3 | 28,8 | 15,6 | 13,6 | | | | | |
| I.a.4 | 1,5 | 20,4 | 23,6 | 41,1 | | | | | |
| I.a.5 | 1,6 | 31,4 | 24,1 | 51,4 | | | | | |
| I.a.6 | 2,4 | 27,0 | 30,7 | 20,6 | | | | | |
| I.a.7 | 2,4 | 36,8 | 34,3 | 33,8 | | | | | |
| I.a.8 | 2,8 | 30,8 | 33,3 | 27,5 | | | | | |
| I.a.9 | 1,9 | 36,7 | 28,5 | 67,3 | 23,0 | 20,0 | 1,6 | 39,3 | 15,5 |
| I.a.10 | 1,2* | 65,4 | 31,6 | 24,6 | 30,7 | 22,0 | < 0,8 | | |

| | | | | | | | | | |
|---|---|---|---|---|---|---|---|---|---|
| *120 min Polymerisationszeit | | | | | | | | | |

**Tabelle 5: Polymerisationsergebnisse mit Komplexen der allgemeinen Formel I.b**

| Komplex | drucklose Ethylen-Polymerisation | | Ethylen-Polymerisation bei 40 bar | | Ethylen-Hexen-Copolymerisation | | | Einfluss von Wasserstoff auf Ethylen-Polymerisation | |
|---|---|---|---|---|---|---|---|---|---|
| | Ausbeute [g] | η-Wert [dl/g] | Ausbeute [g] | η-Wert [dl/g] | Ausbeute [g] | η-Wert [dl/g] | Hexen Einbau [Gew.-%] | Ausbeute [g] | η-Wert [dl/g] |
| I.b.1 | | | 22,0 | | | | | | |
| I.b.2 | | | 0,9 | 24,3 | | | | | |
| I.b.3 | | | 2,9 | 13,7 | | | | | |
| I.b.4 | | | 0,1 | 45,6 | | | | | |
| I.b.5 | 0,6 | 21,2 | 29,2 | 46,8 | 20,7 | 30,1 | < 0,6 | 18,1 | 9,4 |
| I.b.6 | 0,4 | 19,5 | 24,5 | 38,7 | 15,2 | 41,9 | 1,3 | 2,4 | 16,3 |
| I.b.7 | 0,3 | 24,6 | 40,0 | 46,1 | 43,4 | 26,6 | < 0,8 | 15,5 | 4,5 |

## Patentansprüche

1. Komplexverbindungen der allgemeinen Formel I a bis I b, 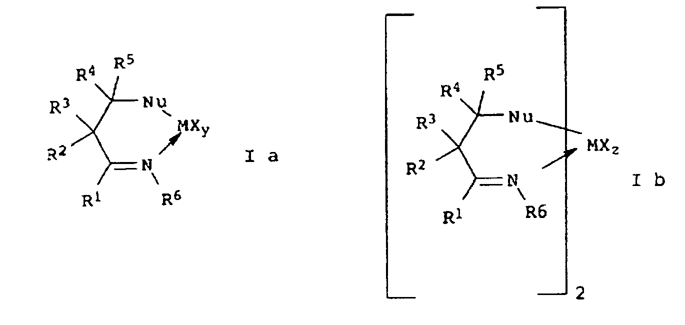 bei denen die Variablen wie folgt definiert sind:
Nu ausgewählt aus O, S oder N-R⁷;
M ausgewählt aus Ti, Zr, Hf, V, Nb oder Ta;
y entspricht der Oxidationsstufe von M abzüglich 1;
z entspricht der Oxidationsstufe von M abzüglich 2;
X gleich oder verschieden und ausgewählt aus Halogen, C₁-C₈-Alkyl, C₃-C₁₂-Cycloalkyl, C₇-C₁₃-Aralkyl oder C₆-C₁₄-Aryl,
R¹ bis R⁷ gleich oder verschieden und ausgewählt aus Wasserstoff,
C₁-C₁₈-Alkyl, substituiert oder unsubstituiert,
C₂-C₁₈-Alkenyl, substituiert oder unsubstituiert, mit ein bis 4 isolierten oder konjugierten Doppelbindungen;
C₃-C₁₂-Cycloalkyl, substituiert oder unsubstituiert,
C₇-C₁₃-Aralkyl,
C₆-C₁₄-Aryl, unsubstituiert oder einfach oder mehrfach gleich oder verschieden substituiert mit
C₁-C₁₈-Alkyl, substituiert oder unsubstituiert,
C₂-C₁₈-Alkenyl, substituiert oder unsubstituiert,
C₃-C₁₂-Cycloalkyl,
C₇-C₁₃-Aralkyl,
C₆-C₁₄-Aryl,
Halogen,
C₁-C₆-Alkoxy, substituiert oder unsubstituiert,
C₆-C₁₄-Aryloxy,
SiR⁸R⁹R¹⁰ oder O-SiR⁸R⁹R¹⁰;
fünf- bis sechsgliedrigen stickstoffhaltigen Heteroaryl-resten, unsubstituiert oder einfach oder mehrfach gleich oder verschieden substituiert mit
C₁-C₁₈-Alkyl, substituiert oder unsubstituiert,
C₂-C₁₈-Alkenyl, substituiert oder unsubstituiert,
C₃-C₁₂-Cycloalkyl,
C₇-C₁₃-Aralkyl,
C₆-C₁₄-Aryl,
Halogen,
C₁-C₆-Alkoxy,
C₆-C₁₄-Aryloxy,
SiR⁸R⁹R¹⁰ oder O-SiR⁸R⁹R¹⁰;
wobei räumlich benachbarte Reste R¹ bis R⁶ miteinander oder mit R⁷ zu einem 5- bis 12-gliedrigen Ring verbunden sein können, der seinerseits Substituenten tragen kann, die ausgewählt sind aus C₁-C₈-Alkyl, substituiert oder unsubstituiert, C₂-C₈-Alkenyl, substituiert oder unsubstituiert, mit ein bis 4 isolierten oder konjugierten Doppelbindungen, C₃-C₁₂-Cyclo-alkyl, substituiert oder unsubstituiert, C₇-C₁₃-Aralkyl oder C₆-C₁₄-Aryl;
R⁸ bis R¹⁰ gleich oder verschieden und ausgewählt werden aus Wasserstoff, C₁-C₈-Alkyl, C₃-C₁₂-Cycloalkyl, C₇-C₁₃-Aralkyl oder C₆-C₁₄-Aryl.

2. Komplexverbindungen gemäß Anspruch 1, **dadurch gekennzeichnet, dass** Nu Sauerstoff ist, M aus Ti und Zr gewählt wird und X Halogen ist.

3. Verfahren zur Polymerisation oder Copolymerisation von Olefinen unter Verwendung von Komplexverbindungen der allgemeinen Formel I a oder I b nach Anspruch 1 oder 2 und einem Aktivator.

4. Verfahren zur Herstellung von Komplexverbindungen gemäß Anspruch 1 oder 2, **dadurch gekennzeichnet, dass** man einen Liganden der allgemeinen Formel II 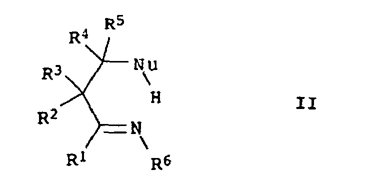 zunächst mit Hilfe einer Base deprotoniert und anschließend mit einer metallverbindung MXₓ₊₁ umsetzt, wobei M ausgewählt ist aus Ti, Zr, Hf, V, Nb oder Ta und X Halogen, C₁-C₈-Alkyl, C₃-C₁₂-Cycloalkyl, C₇-C₁₃-Aralkyl oder C₆-C₁₄-Aryl bedeutet und R6 ausgewählt ist aus
C₁-C₁₈-Alkyl, substituiert oder unsubstituiert,
C₂-C₁₈-Alkenyl, substituiert oder unsubstituiert, mit ein
bis 4 isolierten oder konjugierten Doppelbindungen; C₃-C₁₂-Cycloalkyl, substituiert oder unsubstituiert,
C₇-C₁₃-Aralkyl,
C₆-C₁₄-Aryl, unsubstituiert oder einfach oder mehrfach gleich oder verschieden substituiert mit
C₁-C₁₈-Alkyl, substituiert oder unsubstituiert,
C₂-C₁₈-Alkenyl, substituiert oder unsubstituiert,
C₃-C₁₂-Cycloalkyl,
C₇-C₁₃-Aralkyl,
C₆-C₁₄-Aryl,
Halogen,
C₁-C₆-Alkoxy, substituiert oder unsubstituiert,
C₆-C₁₄-Aryloxy,
SiR⁸R⁹R¹⁰ oder O-SiR⁸R⁹R¹⁰;
fünf- bis sechsgliedrigen stickstoffhaltigen Heteroarylresten, unsubstituiert oder einfach oder mehrfach gleich oder verschieden substituiert mit
C₁-C₁₈-Alkyl, substituiert oder unsubstituiert,
C₂-C₁₈-Alkenyl, substituiert oder unsubstituiert,
C₃-C₁₂-Cycloalkyl,
C₇-C₁₃-Aralkyl,
C₆-C₁₄-Aryl,
Halogen,
C₁-C₆-Alkoxy,
C₆-C₁₄-Aryloxy,
SiR⁸R⁹R¹⁰ oder O-SiR⁸R⁹R¹⁰;
wobei räumlich benachbarte Reste R¹ bis R⁶ miteinander oder mit R⁷ zu einem 5- bis 12-gliedrigen Ring verbunden sein können, der seinerseits Substituenten tragen kann, die ausgewählt sind aus C₁-C₈-Alkyl, substituiert oder unsubstituiert, C₂-C₈-Alkenyl, substituiert oder unsubstituiert, mit ein bis 4 isolierten oder konjugierten Doppelbindungen, C₃-C₁₂-cycloalkyl, substituiert oder unsubstituiert, C₇-C₁₃-Aralkyl oder C₆-C₁₄-Aryl;
R⁸ bis R¹⁰ gleich oder verschieden und ausgewählt werden aus Wasserstoff, C₁-C₈-Alkyl, C₃-C₁₂-Cycloalkyl, C₇-C₁₃-Aralkyl oder C₆-C₁₄-Aryl,
und wobei MX_{y+1} optional durch Neutralliganden stabilisiert werden kann.

5. Verfahren zur Herstellung eines Trägerkatalysators für die Polymerisation oder Copolymerisation von Olefinen, **dadurch gekennzeichnet, dass** man eine oder mehrere Komplexverbindungen nach Anspruch 1 oder 2 und optional einen Aktivator auf einem festen Träger abscheidet.

6. verfahren zur Herstellung eines Trägerkatalysators für die Polymerisation oder Copolymerisation von Olefinen, **dadurch gekennzeichnet, dass** man eine oder mehrere Komplexverbindungen nach Anspruch 1 oder 2 und einen Aktivator auf einem festen Träger abscheidet.

7. Trägerkatalysator für die Polymerisation oder Copolymerisation von Olefinen, erhältlich nach einem Verfahren gemäß Anspruch 5 oder 6.

8. Verfahren zur Polymerisation oder Copolymerisation von Olefinen unter Verwendung eines Trägerkatalysators gemäß Anspruch 6.

9. Verfahren zur Polymerisation oder Copolymerisation von Olefinen unter Verwendung eines Trägerkatalysators gemäß Anspruch 5 und einem Aktivator.

## Claims

1. A complex of the formula I a or I b, 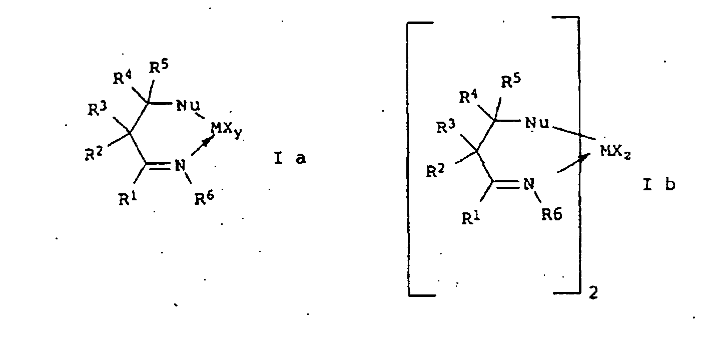 where the variables are defined as follows:
Nu is selected from among O, S and N-R⁷;
M is selected from among Ti, Zr, Hf, V, Nb and Ta;
y corresponds to the oxidation state of M minus 1;
z corresponds to the oxidation state of M minus 2;
X are identical or different and are selected from among halogen, C₁-C₈-alkyl, C₃-C₁₂₋cycloalkyl, C₇-C₁₃-aralkyl and C₆-C₁₄-aryl,
R¹ to R⁷ are identical or different and are selected from among
hydrogen,
C₁-C₁₈-alkyl, substituted or unsubstituted,
C₂-C₁₈-alkenyl, substituted or unsubstituted, having from one to 4 isolated or conjugated double bonds;
C₃-C₁₂-cycloalkyl, substituted or unsubstituted,
C₇-C₁₃-aralkyl,
C₆-C₁₄-aryl, unsubstituted or substituted by one or more identical or different substituents selected from among
C₁-C₁₈-alkyl, substituted or unsubstituted,
C₂-C₁₈-alkenyl, substituted or unsubstituted,
C₃-C₁₂-cycloalkyl,
C₇-C₁₃-aralkyl ,
C₆-C₁₄-aryl,
halogen,
C₁-C₆-alkoxy, substituted or unsubstituted,
C₆-C₁₄-aryloxy,
SiR⁸R⁹R¹⁰ and O-SiR⁸R⁹R¹⁰;
five- and six-membered nitrogen-comprising heteroaryl radicals, unsubstituted or substituted by one or more identical or different substituents selected from among
C₁-C₁₈-alkyl, substituted or unsubstituted,
C₂-C₁₈-alkenyl, substituted or unsubstituted,
C₃-C₁₂-cycloalkyl,
C₇-C₁₃-aralkyl,
C₆-C₁₄-aryl,
halogen,
C₁-C₆-alkoxy,
C₆-C₁₄-aryloxy,
SiR⁸R⁹R¹⁰ and O-SiR⁸R⁹R¹⁰;
where adjacent radicals R¹ to R⁶ may be joined to one another or to R⁷ to form a 5- to 12-membered ring which may in turn bear substituents selected from among C₁-C₈-alkyl, substituted or unsubstituted, C₂-C₈-alkenyl, substituted or unsubstituted, having from one to 4 isolated or conjugated double bonds, C₃-C₁₂-cycloalkyl, substituted or unsubstituted, C₇-C₁₃-aralkyl and C₆-C₁₄-aryl;
R⁸ to R¹⁰ are identical or different and are selected from among hydrogen, C₁-C₈-alkyl, C₃₋C₁₂-cycloalkyl, C₇-C₁₃-aralkyl and C₆-C₁₄-aryl.

2. The complex according to claim 1, wherein Nu is oxygen, M is selected from among Ti and Zr, and X is halogen.

3. A process for the polymerization or copolymerization of olefins using the complex of the formula I a or I b according to claim 1 or 2 and an activator.

4. A process for preparing the complex according to claim 1 or 2, which comprises firstly deprotonating a ligand of the formula II 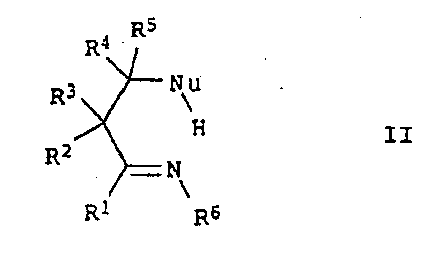 by means of a base and subsequently reacting the product with a metal compound MX_{y+1}, where M is selected from among Ti, Zr, Hf, V, Nb or Ta, and X is halogen, C₁-C₈-alkyl, C₃-C₁₂-cycloalkyl, C₇-C₁₃₋aralkyl or C₆-C₁₄-aryl and R₆ is selected from among
C₁-C₁₈-alkyl, substituted or unsubstituted,
C₂-C₁₈-alkenyl, substituted or unsubstituted, having from one to 4 isolated or conjugated double bonds;
C₃-C₁₂-cycloalkyl, substituted or unsubstituted,
C₇-C₁₃-aralkyl ,
C₆-C₁₄-aryl, unsubstituted or substituted by one or more identical or different substituents selected from among
C₁-C₁₈-alkyl, substituted or unsubstituted,
C₂-C₁₈-alkenyl, substituted or unsubstituted,
C₃-C₁₂-cycloalkyl,
C₇-C₁₃-aralkyl,
C₆-C₁₄-aryl,
halogen,
C₁-C₆-alkoxy, substituted or unsubstituted,
C₆-C₁₄-aryloxy,
SiR⁸R⁹R¹⁰ and O-SiR⁸R⁹R¹⁰;
five- and six-membered nitrogen-comprising heteroaryl radicals, unsubstituted or substituted by one or more identical or different substitutents selected from among
C₁-C₁₈-alkyl, substituted or unsubstituted,
C₂-C₁₈-alkenyl, substituted or unsubstituted,
C₃-C₁₂-cycloalkyl,
C₇-C₁₃-aralkyl,
C₆-C₁₄-aryl,
halogen,
C₁-C₆-alkoxy,
C₆-C₁₄-aryloxy,
SiR⁸R⁹R¹⁰ and O-SiR⁸R⁹R¹⁰;
where adjacent radicals R¹ to R⁶ may be joined to one another or to R⁷ to form a 5- to 12-membered ring which may in turn bear substituents selected from among C₁-C₈-alkyl, substituted or unsubstituted,
C₂-C₈-alkenyl, substituted or unsubstituted, having from one to 4 isolated or conjugated double bonds, C₃-C₁₂-cycloalkyl, substituted or unsubstituted, C₇-C₁₃-aralkyl and C₆-C₁₄-aryl ;
R⁸ to R¹⁰ are identical or different and are selected from among hydrogen, C₁-C₈-alkyl, C₃-C₁₂-cycloalkyl, C₇-C₁₃-aralkyl and C₆-C₁₄₋aryl,
where MX_{y+1} may optionally be stabilized by
uncharged ligands.

5. A process for preparing a supported catalyst for the polymerization or copolymerization of olefins, which comprises depositing one or more complexes according to claim 1 or 2 and optionally an activator on a solid support.

6. A process for preparing a supported catalyst for the polymerization or copolymerization of olefins, which comprises depositing one or more complexes according to claim 1 or 2 and an activator on a solid support.

7. A supported catalyst for the polymerization or copolymerization of olefins which is obtainable by a process according to claim 5 or 6.

8. A process for the polymerization or copolymerization of olefins using a supported catalyst according to claim 6.

9. A process for the polymerization or copolymerization of olefins using a supported catalyst according to claim 5 and an activator.

## Revendications

1. Composés complexes de formule générale I a à I b, 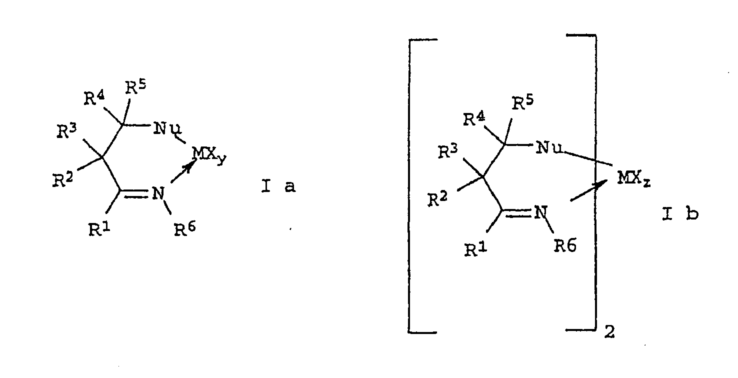 où les variables sont définies comme suit:
Nu est choisi parmi O, S ou N-R⁷;
M est choisi parmi Ti, Zr, Hf, V, Nb ou Ta;
y correspond au degré d'oxydation de M à l'exclusion de 1;
z correspond au degré d'oxydation de M à l'exclusion de 2;
X est identique ou différent et choisi parmi halogène, alkyle en C₁-C₈, cycloalkyle en C₃-C₁₂, aralkyle en C₇-C₁₃ ou aryle en C₆-C₁₄,
R1 à R7 sont identiques ou différents et sont choisis parmi:
hydrogène,
alkyle en C₁-C₁₈, substitué ou non-substitué,
alcényle en C₂-C₁₈, substitué ou non-substitué, avec une à 4 liaisons doubles isolées ou conjuguées;
cycloalkyle en C₃-C₁₂, substitué ou non-substitué,
aralkyle en C₇-C₁₃,
aryle en C₆-C₁₄, non-substitué ou substitué une ou plusieurs fois, de manière identique ou différente, par:
alkyle en C₁-C₁₈, substitué ou non-substitué,
alcényle en C₂-C₁₈, substitué ou non-substitué,
cycloalkyle en C₃-C₁₂,
aralkyle en C₇-C₁₃,
aryle en C₆-C₁₄,
halogène,
alcoxy en C₁-C₆, substitué ou non-substitué,
aryloxy en C₆-C₁₄,
SiR⁸R⁹R¹⁰ ou O-SiR⁸R⁹R¹⁰;
restes hétéroaryle ayant cinq à six chaînons azotés, non-substitués ou substitués une ou plusieurs fois, de manière
identique ou différente, par
alkyle en C₁-C₁₈, substitué ou non-substitué,
alcényle en C₂-C₁₈, substitué ou non-substitué,
cycloalkyle en C₃-C₁₂,
aralkyle en C₇-C₁₃,
aryle en C₆-C₁₄,
halogène,
alcoxy en C₁-C₆,
aryloxy en C₆-C₁₄,
SiR⁸R⁹R¹⁰ ou O-SiR⁸R⁹R¹⁰;
tandis que les restes R¹ à R⁶ voisins du point de vue spatial peuvent être liés entre eux ou avec R⁷ pour former un cycle ayant 5 à 12 chaînons, qui peut à son tour porter des substituants, qui sont choisis parmi alkyle en C₁-C₈, substitué ou non-substitué, alcényle en C₂-C₈, substitué ou non-substitué, comportant une à 4 doubles liaisons isolées ou conjuguées, cycloalkyle en C₃-C₁₂, substitué ou non-substitué, aralkyle en C₇-C₁₃ ou aryle en C₆-C₁₄;
R⁸ à R¹⁰ sont identiques ou différents et sont choisis parmi hydrogène, alkyle en C₁-C₈, cycloalkyle en C₃-C₁₂, aralkyle en C₇-C₁₃ ou aryle en C₆-C₁₄.

2. Composés complexes selon la revendication 1, **caractérisés par le fait que** Nu est l'oxygène, M est choisi parmi Ti et Zr, et X est un halogène.

3. Procédé pour la polymérisation ou la copolymérisation d'oléfines avec utilisation de composés complexes de formule générale I a ou I b selon la revendication 1 ou 2 et d'un activateur.

4. Procédé pour la préparation de composés complexes selon la revendication 1 ou 2, **caractérisé par le fait qu'**on déprotone d'abord au moyen d'une base un ligand de formule générale II 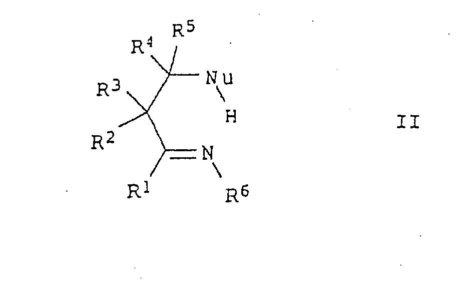 et on fait ensuite réagir avec un composé métallique MX_{y+1}, tandis que M est choisi parmi Ti, Zr, Hf, V, Nb ou Ta, et X désigne un halogène, un alkyle en C₁-C₈, un cycloalkyle en C₃-C₁₂, un aralkyle en C₇-C₁₃ ou un aryle en C₆-C₁₄, et R⁶ est choisi parmi
alkyle en C₁-C₁₈, substitué ou non-substitué,
alcényle en C₂-C₁₈, substitué ou non-substitué, avec une à 4 liaisons doubles isolées ou conjuguées;
cycloalkyle en C₃-C₁₂, substitué ou non-substitué,
aralkyle en C₇-C₁₃,
aryle en C₆-C₁₄, non-substitué ou substitué une ou plusieurs
fois, de manière identique ou différente, par
alkyle en C₁-C₁₈, substitué ou non-substitué,
alcényle en C₂-C₁₈, substitué ou non-substitué,
cycloalkyle en C₃-C₁₂,
aralkyle en C₇-C₁₃,
aryle en C₆-C₁₄,
halogène,
alcoxy en C₁-C₆, substitué ou non-substitué,
aryloxy en C₆-C₁₄
SiR⁸R⁹R¹⁰ ou O-SiR⁸R⁹R¹⁰;
restes hétéroaryle ayant cinq à six chaînons azotés, non-substitués ou substitués une ou plusieurs fois, de manière
identique ou différente, par
alkyle en C₁-C₁₈, substitué ou non-substitué,
alcényle en C₂-C₁₈, substitué ou non-substitué,
cycloalkyle en C₃-C₁₂,
aralkyle en C₇-C₁₃,
aryle en C₆-C₁₄,
halogène,
alcoxy en C₁-C₆,
aryloxy en C₆-C₁₄,
SiR⁸R⁹R¹⁰ ou O-SiR⁸R⁹R¹⁰;
tandis que les restes R¹ à R⁶ voisins du point de vue spatial peuvent être liés entre eux ou avec R⁷ pour former un cycle ayant 5 à 12 chaînons, qui peut à son tour porter des substituants, qui sont choisis parmi alkyle en C₁-C₈, substitué ou non-substitué, alcényle en C₂-C₈, substitué ou non-substitué, comportant une à 4 doubles liaisons isolées ou conjuguées, cycloalkyle en C₃-C₁₂, substitué ou non-substitué, aralkyle en C₇-C₁₃ ou aryle en C₆-C₁₄;
R⁸ à R¹⁰ sont identiques ou différents et sont choisis parmi hydrogène, alkyle en C₁-C₈, cycloalkyle en C₃-C₁₂, aralkyle en C₇-C₁₃ ou aryle en C₆-C₁₄,
et tandis que MX_{y+1} peut être en option stabilisé par des ligands neutres.

5. Procédé pour la préparation d'un catalyseur sur support pour la polymérisation ou la copolymérisation d'oléfines, **caractérisé par le fait qu'**on dépose sur un support solide un ou plusieurs composés complexes selon la revendication 1 ou 2 et en option un activateur.

6. Procédé pour la préparation d'un catalyseur sur support pour la polymérisation ou la copolymérisation d'oléfines, **caractérisé par le fait qu'**on dépose sur un support solide un ou plusieurs composés complexes selon la revendication 1 ou 2 et un activateur.

7. Catalyseur sur support pour la polymérisation ou la copolymérisation d'oléfines, pouvant être obtenu par un procédé selon la revendication 5 ou 6.

8. Procédé pour la polymérisation ou la copolymérisation d'oléfines avec utilisation d'un catalyseur sur support selon la revendication 6.

9. Procédé pour la polymérisation ou la copolymérisation d'oléfines avec utilisation d'un catalyseur sur support selon la revendication 5 et d'un activateur.
